# EUROPEAN PATENT APPLICATION

(11) **EP 1 136 857 A2**
(43) Date of publication of application: **26.09.2001**
(21) Application number: 01301653.0
(22) Date of filing: 23.02.2001
(51) Int. Cl.: G02B 6/34

(54) **Interleaver/deinterleavers causing little or no dispersion of optical signals**

(30) Priority: 03.03.2000 US 517640; 27.07.2000 US 626698; 03.03.2000 US 517641
(71) Applicant: E-TEK DYNAMICS, INC., San Jose, CA 95131 (US)
(72) Inventor: Tai, Kuochou, Fremont, California 945339 (US); Chang, Kok-Wai, Los Altos, California 94024 (US); Chen, Jye-Hong, New Jersey 08060 (US)
(74) Representative: McKechnie, Neil Henry

(57) **Abstract**

The present invention relates to interleaver/deinterleaver devices for combining/separating optical channels. An interleaver/deinterleaver is "folded" when an optical signal follows an optical path that passes through a birefringent assembly multiple times. Double-pass refers to optical signals following a (folded) path through the birefringent assembly twice. Multi-pass refers to optical signals following a (folded) path through the birefringent assembly multiple times. When operating as a deinterleaver, the interleaver/deinterleaver separates an optical signal (e.g., WDM signal) into subsets of optical signals (e.g., even and odd ITU channels). When operating as an interleaver, the interleaver/deinterleaver mixes subsets of optical signals into a multiplexed optical signal. The interleaver/de-interleaver can be used to increase the bandwidth of an optical network. For example, the interleaver/deinterleaver can be used to interface components designed for a first channel spacing (e.g., 100 GHz) to components designed for a second channel spacing (e.g., 200 GHz). Folded interleaver/deinterleavers cause dispersion because the speed at which the ordinary beam of an optical signal passes through the birefringent assembly is different that the speed at which the extraordinary beam of the optical signal passes through the birefringent assembly. In order to reduce or eliminate dispersion, the polarization of the optical signal is reversed for alternating passes through the birefringent crystal. For example, if a signal is horizontally polarized for a first pass through the birefringent crystal, the signal is rotated so that it is vertically polarized for a second pass through the birefringent crystal. For a third pass through the birefringent assembly, the signal is rotated so that it is again horizontally polarized.

## Description

### FIELD OF THE INVENTION

The invention relates to optical devices. More particularly, the invention relates to an interleaver/deinterleaver having a folded design that causes little or no dispersion in optical signals.

### BACKGROUND OF THE INVENTION

As telecommunications usage increases as a result of, for example, increased Internet usage, increased types of communications, and population growth, telecommunications providers are required to provide greater voice- and data-carrying capacity. In order to reduce cost and the amount of time required to provide the increased capacity wavelength division multiplexing (WDM) and dense wavelength division multiplexing (DWDM) have been developed, which provide increased capacity without requiring new fiber optic cables.

WDM and DWDM technologies combine multiple optical signals into a single fiber by transporting different signals on different optical wavelengths or channels. Interleaving and deinterleaving of optical channels is typically accomplished with thin film optical filters. However, multiple layers of film are required to interleave and deinterleave multiple channels, which increases the cost and complexity of a component. Another disadvantage of multiple layers of thin film for filtering is that the thin films break down over time, especially when operating under high power conditions.

What is needed is an improved optical device for use with WDM and/or DWDM optical signals. Prior attempts to improve optical devices are disclosed in United States Patents Nos. 4,566,761 issued January 28, 1986 to Carlsen et al; 4,685,773 issued August 11, 1987 to Carlsen et al; and 5,694,233 issued December 2, 1997 to Wu et al.

### SUMMARY OF THE INVENTION

Accordingly, the present invention relates to an interleaver/deinterleaver apparatus comprising:
a first port for inputting or outputting a first polarized optical signal, which comprises a second optical signal with a first subset of channels and a third optical signal with a second subset of channels;
a second port for outputting or inputting the second optical signal;
a third port for outputting or inputting the third optical signal;
a birefringent assembly optically coupled to the first, second and third ports, whereby after a first pass through the birefringent assembly the second signal exits the birefringent assembly with a polarization orthogonal to the polarization of the third signal;
a beam splitting/combining means for separating the first signal input from the first port into the second signal and the third signal, or for combining the second signal input from the second port with the third signal input from the third port into the first signal; and
first reflecting means for directing the second and third signals separately back through the birefringent assembly for a second pass along second and third paths, respectively, which are substantially parallel to a first path taken by the first signal, for output via the second and third ports, respectively, or for reflecting the second and third signals, which traveled the second and third paths during a first pass, back together through the birefringent assembly for a second pass along the first path.

### BRIEF DESCRIPTION OF THE DRAWINGS

The invention is illustrated by way of example, and not by way of limitation in the figures of the accompanying drawings in which like reference numerals refer to similar elements.
**Figure 1** is a conceptual illustration of a conversion from an optical channel scheme having 100 GHz spacing to an optical channel scheme having 200 GHz.
**Figure 2** is a block diagram of one embodiment of an optical deinterleaver for conversion from an optical channel scheme having 50 GHz spacing to an optical channel scheme having 200 GHz spacing.
**Figure 3** is a block diagram of one embodiment of an optical interleaver for conversion from an optical channel scheme having 200 GHz spacing to an optical channel scheme having 50 GHz spacing.
**Figure 4a** is a top view of one embodiment of an optical interleaver/deinterleaver having a quarter wave mirror as a reflective element.
**Figure 4b** is a side view of one embodiment of an optical interleaver/deinterleaver having a quarter wave mirror as a reflective element.
**Figure 5a** is a top view of one embodiment of an optical interleaver/deinterleaver having multiple half wave plates and a quarter wave mirror as a reflective element.
**Figure 5b** is a side view of one embodiment of an optical interleaver/deinterleaver having multiple half wave plates and a quarter wave mirror as a reflective element.
**Figure 6a** is a top view of one embodiment of an optical interleaver/deinterleaver having multiple half wave plates and a 90° prism as a reflective element.
**Figure 6b** is a side view of one embodiment of an optical interleaver/deinterleaver having multiple half wave plates and a 90° prism as a reflective element.
**Figure 7a** is a top view of one embodiment of an optical interleaver/deinterleaver having multiple half wave plates and a polarization beam splitter and reflective prism assembly as a reflective element.
**Figure 7b** is a side view of one embodiment of an optical interleaver/deinterleaver having multiple half wave plates and a polarization beam splitter and reflective prism assembly as a reflective element.
**Figure 8a** is a side view of an isolator structure that can be used with, for example, the interleaver/deinterleavers of Figures 4-7.

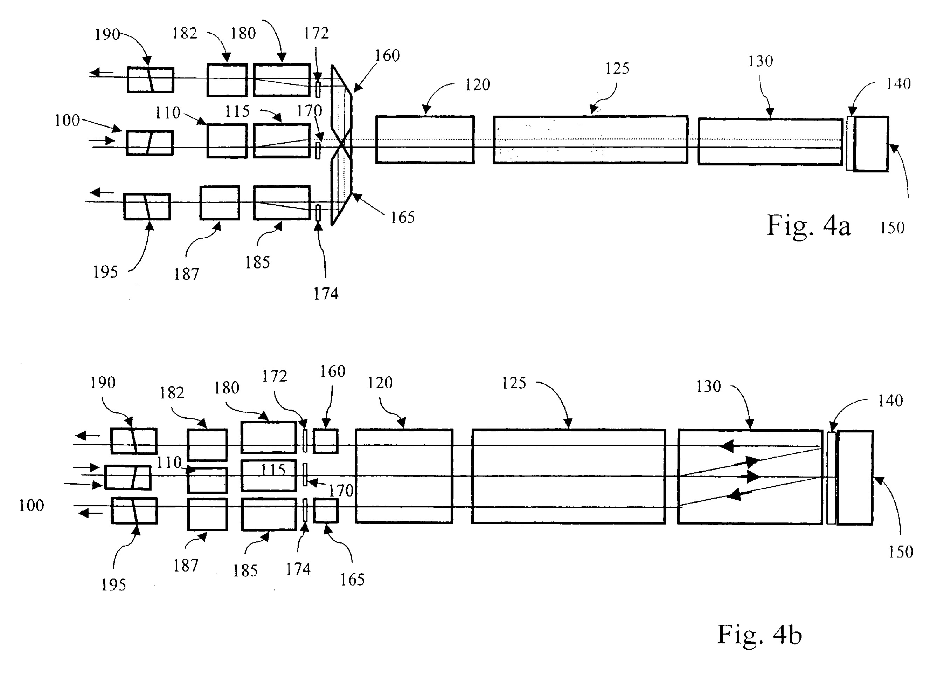

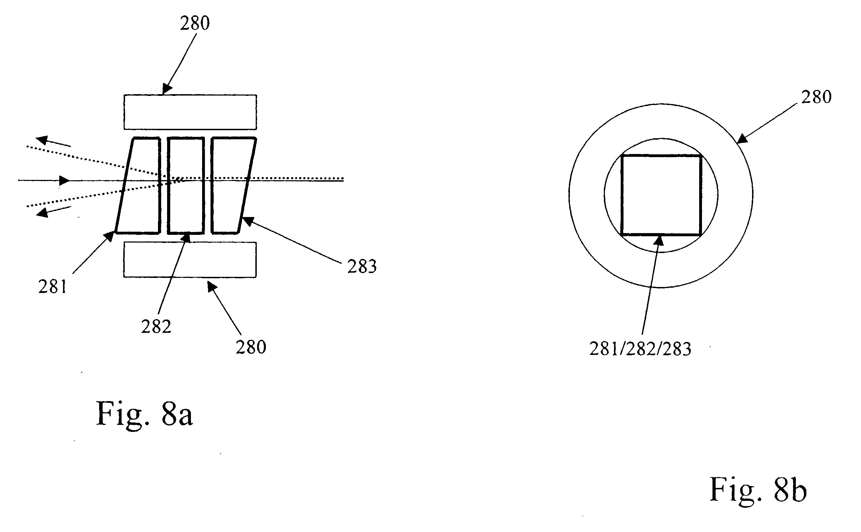

**Figure 8a** is a cross sectional view of an isolator structure that can be used with, for example, the interleaver/deinterleavers of Figures 4-7.

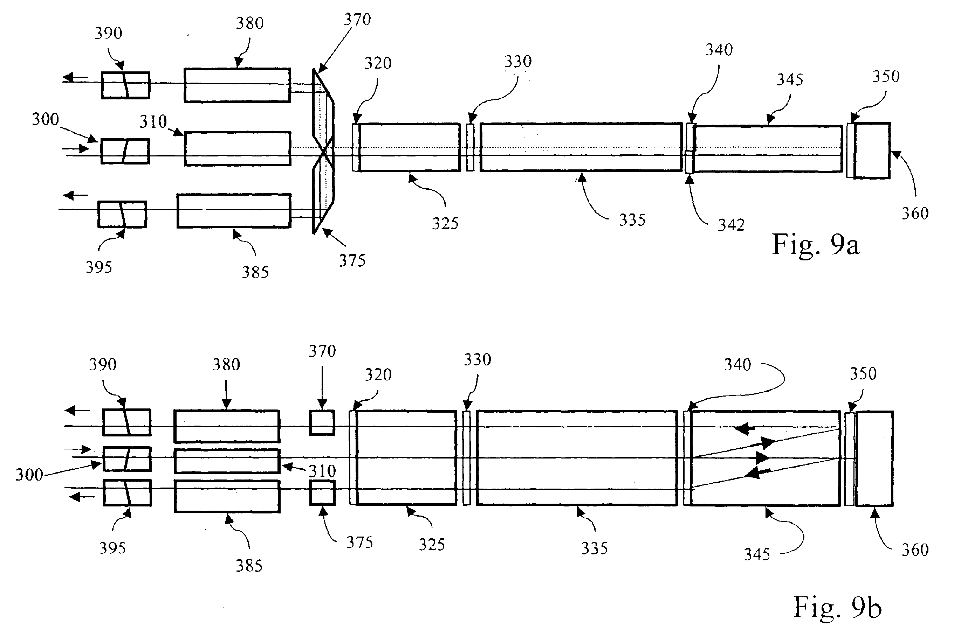

**Figure 9a** is a top view of one embodiment of an optical interleaver/deinterleaver having a walk-off crystal for isolation and a quarter wave mirror as a reflective element.
**Figure 9b** is a side view of one embodiment of an optical interleaver/deinterleaver having a walk-off crystal for isolation and a quarter wave mirror as a reflective element.

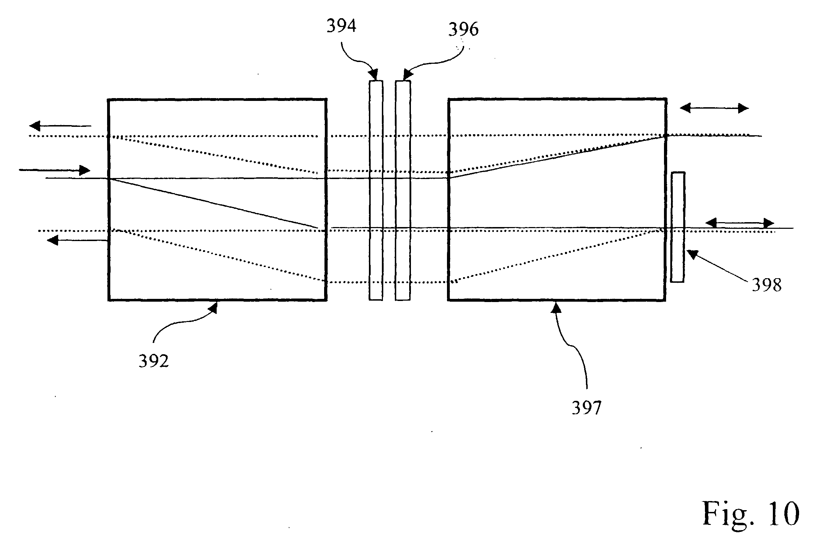

**Figure 10** is a side view of one embodiment of a walk-off crystal-based isolator that can be used with, for example, the interleaver/deinterleaver of Figure 9

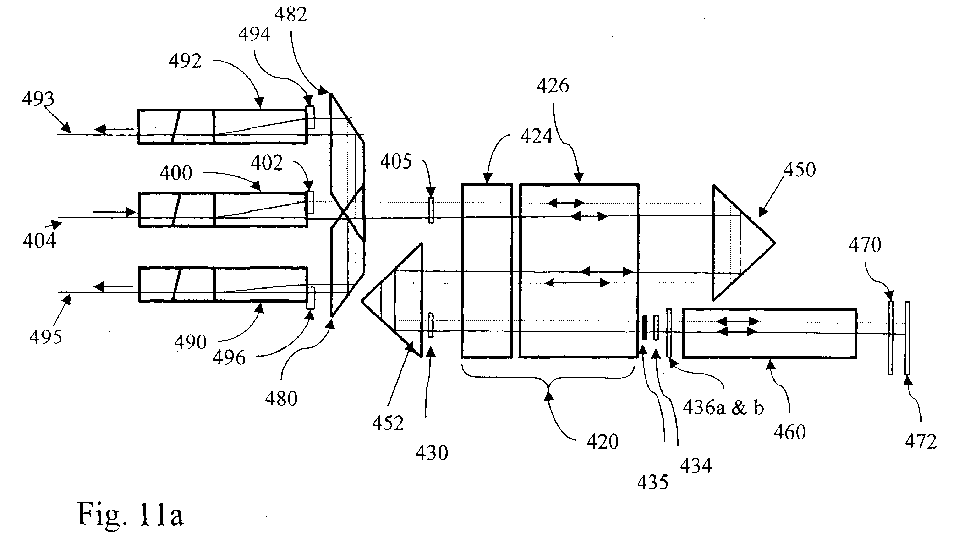

**Figure 11a** illustrates a top view of one embodiment of a double-pass folded interleaver/deinterleaver that causes dispersion.

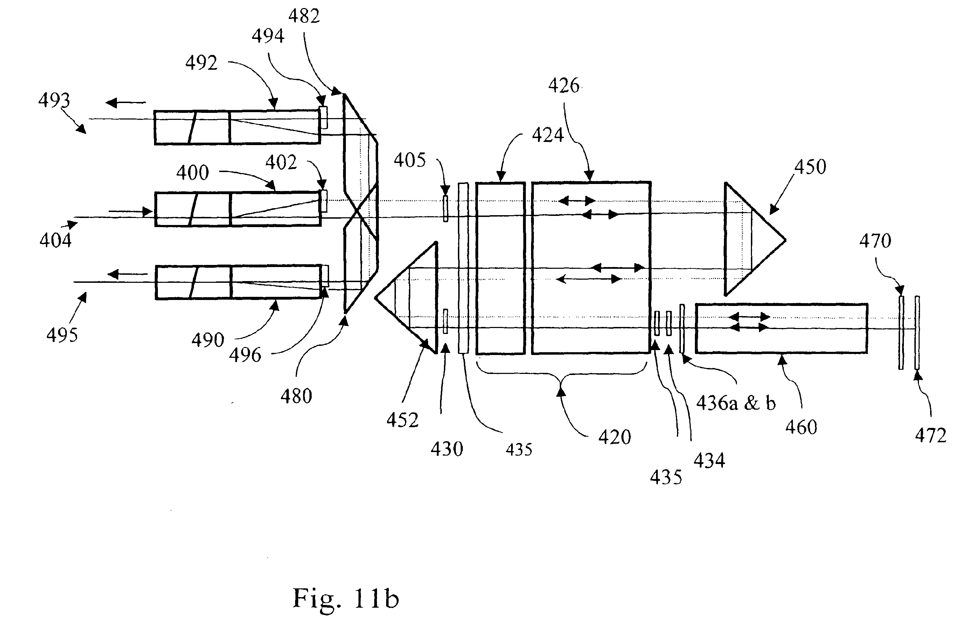

**Figure 11b** illustrates a top view of one embodiment of a double-pass folded interleaver/deinterleaver that causes dispersion.

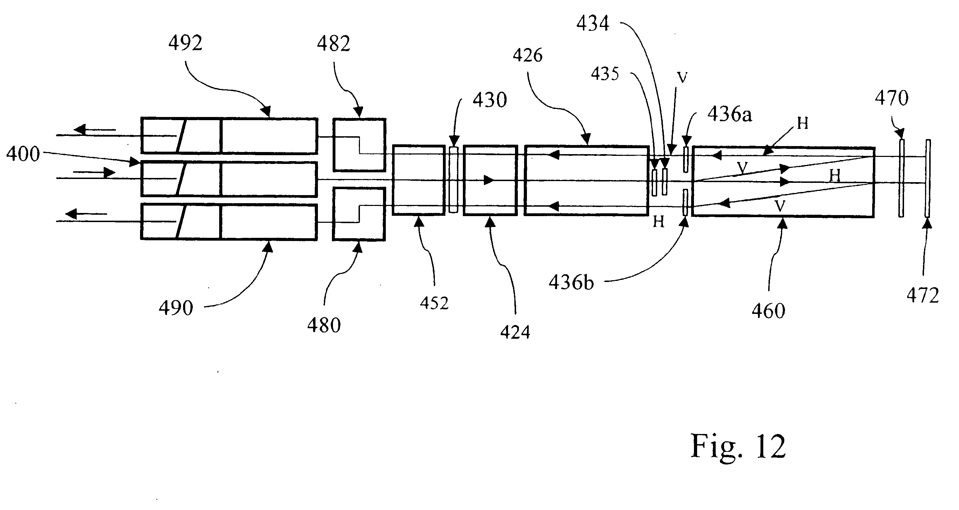

**Figure 12** illustrates a side view of one embodiment of the double-pass folded interleaver/deinterleaver of Figures 11a and 11b.

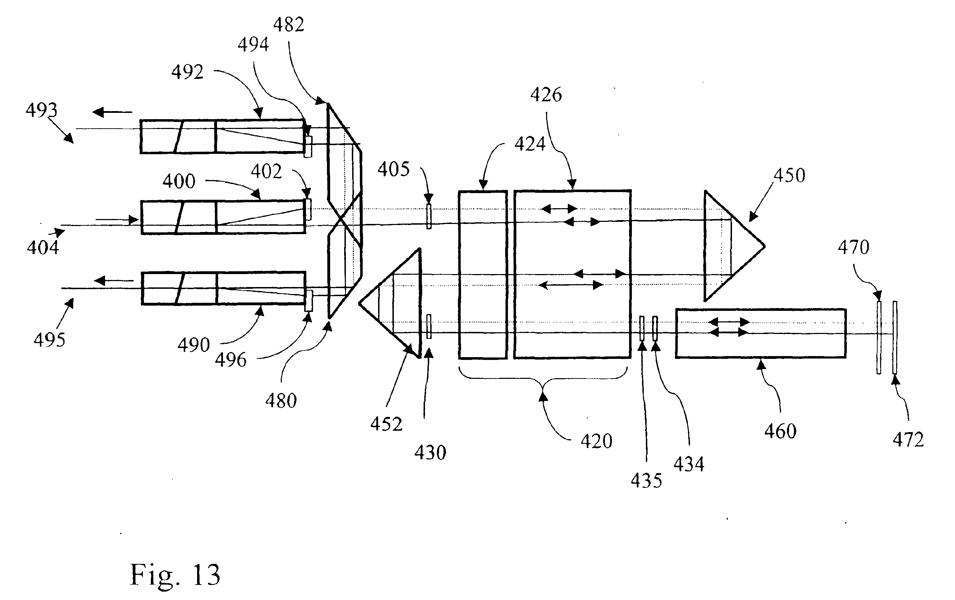

**Figure 13** illustrates a top view of one embodiment of a double-pass folded, dispersion-free interleaver/deinterleaver.

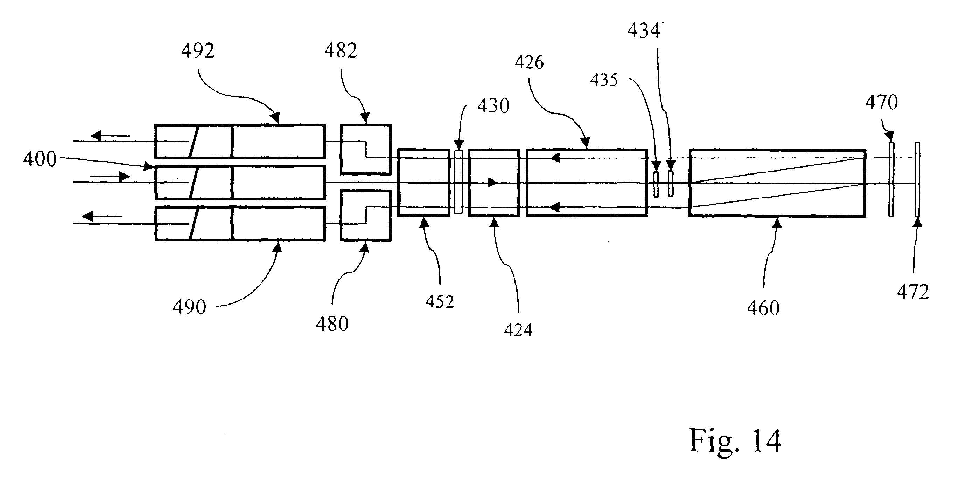

**Figure 14** illustrates a side view of one embodiment of the double-pass folded interleaver/deinterleaver of Figure 13.

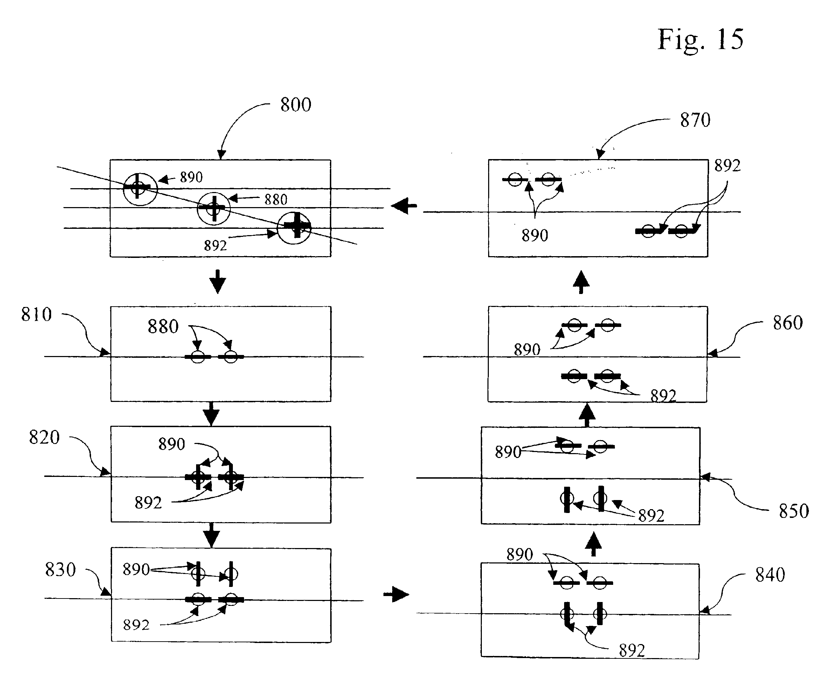

**Figure 15** illustrates a cross-sectional view of polarization states of a double-pass optical interleaver/deinterleaver as illustrated in Figures 13 and 14.

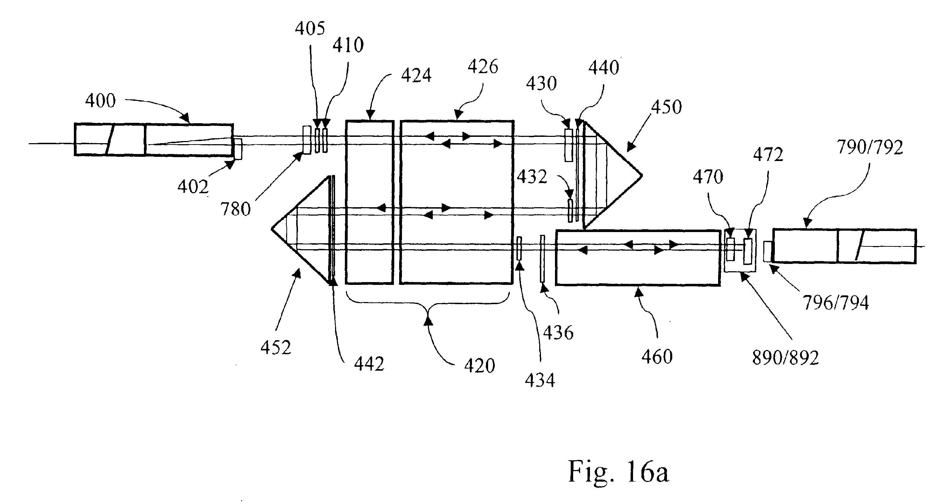

**Figure 16a** illustrates a top view of one embodiment of a multi-pass optical interleaver/deinterleaver that causes dispersion.

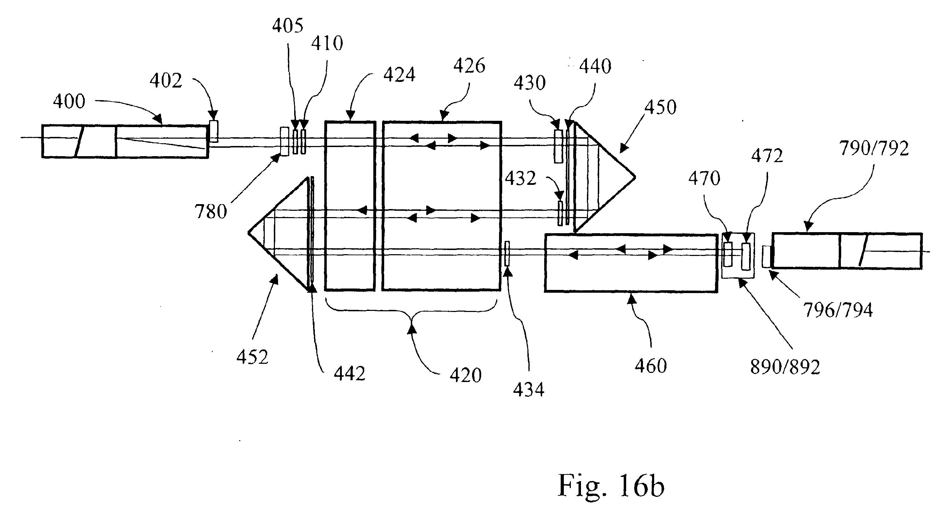

**Figure 16b** illustrates a top view of one embodiment of a multi-pass optical interleaver/deinterleaver causing reduced dispersion as compared to the interleaver/de-interleaver of Figure 16a.

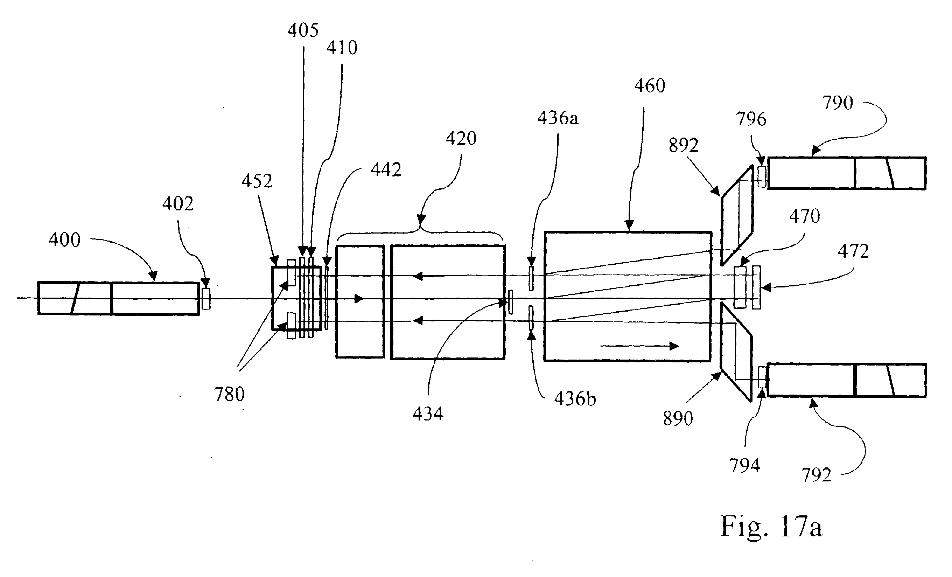

**Figure 17a** illustrates a side view of the multi-pass optical interleaver/deinterleaver of Figure 16a.

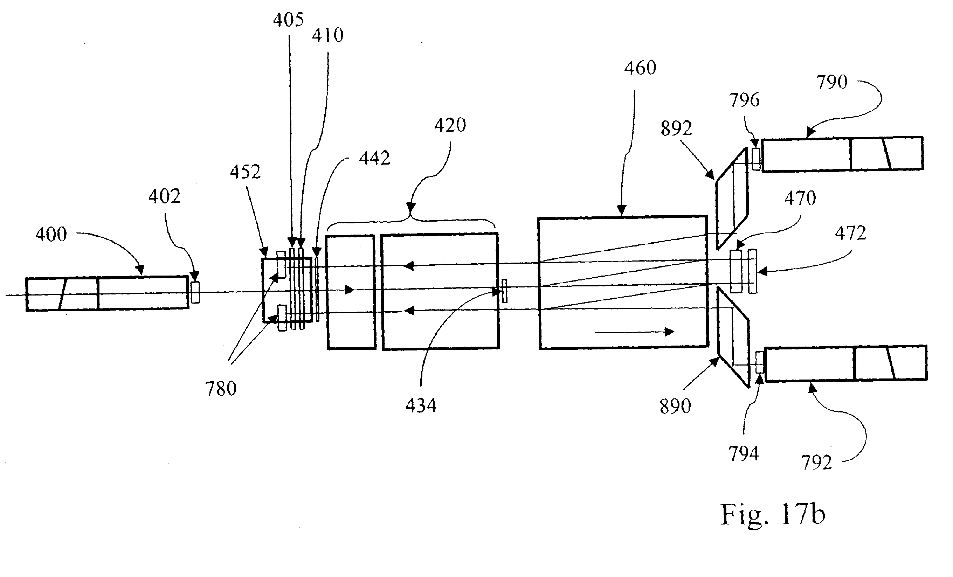

**Figure 17b** illustrates a side view of the multi-pass optical interleaver/deinterleaver of Figure 16b.

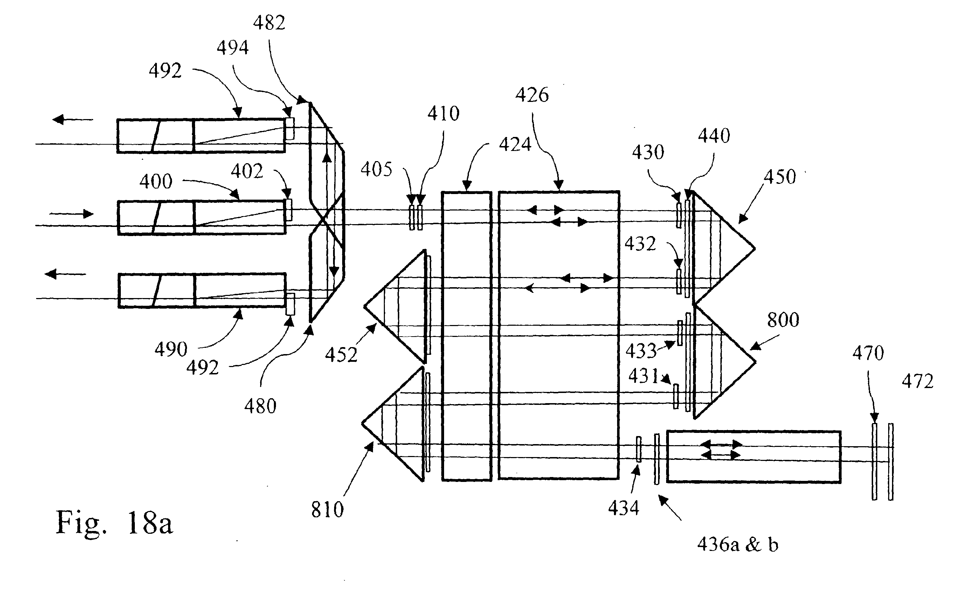

**Figure 18a** illustrates a top view of one embodiment of a double-pass folded interleaver/deinterleaver that causes dispersion.

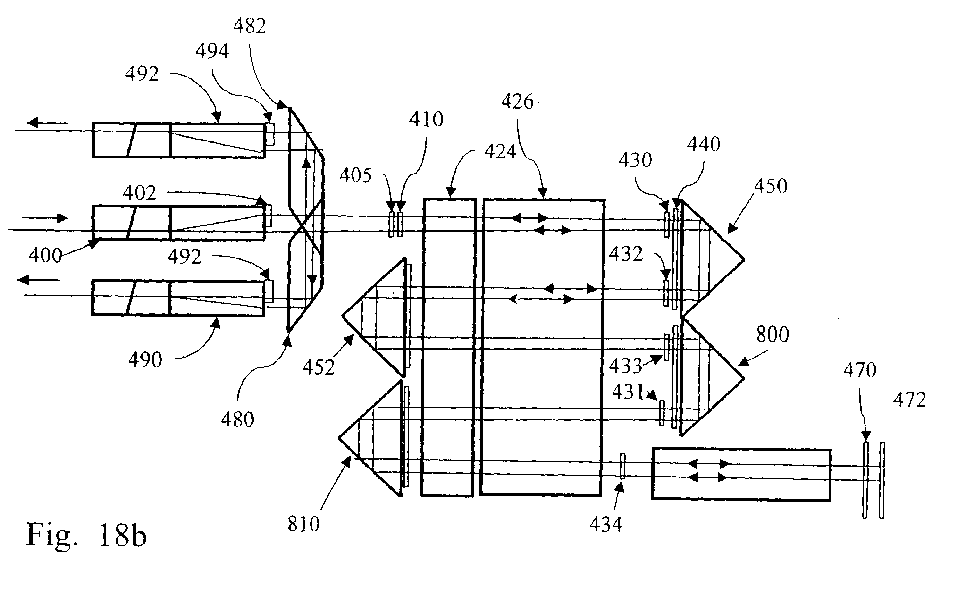

**Figure 18b** illustrates a top view of one embodiment of a double-pass folded interleaver/deinterleaver that causes little or no dispersion.

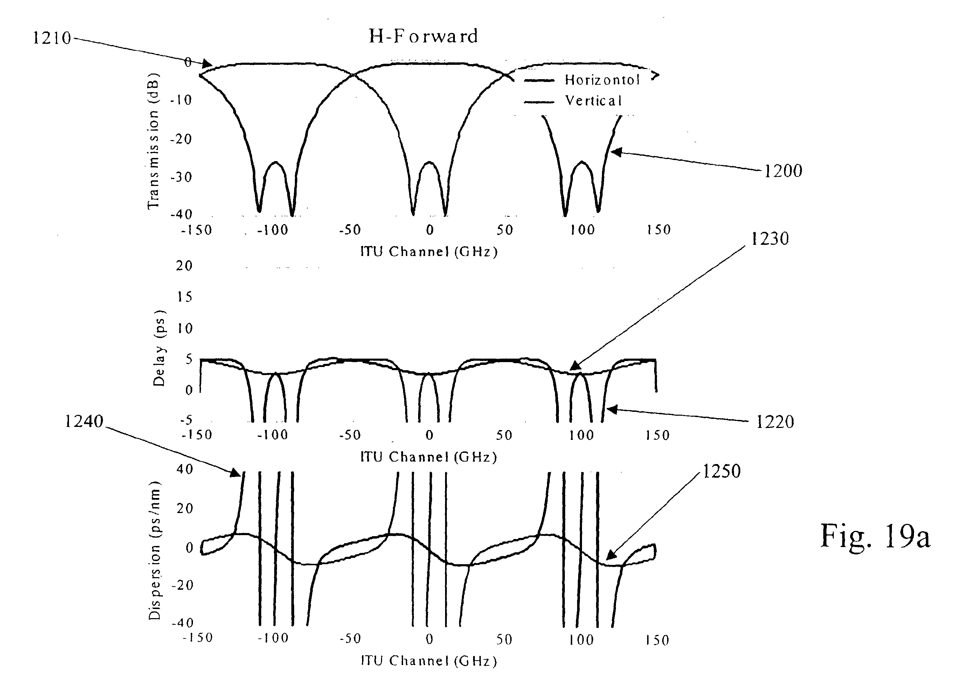

**Figure 19a** illustrates representative transmission, delay and dispersion characteristics for an interleaver/deinterleaver causing little or no dispersion for horizontally polarized optical signals passing in the forward direction.

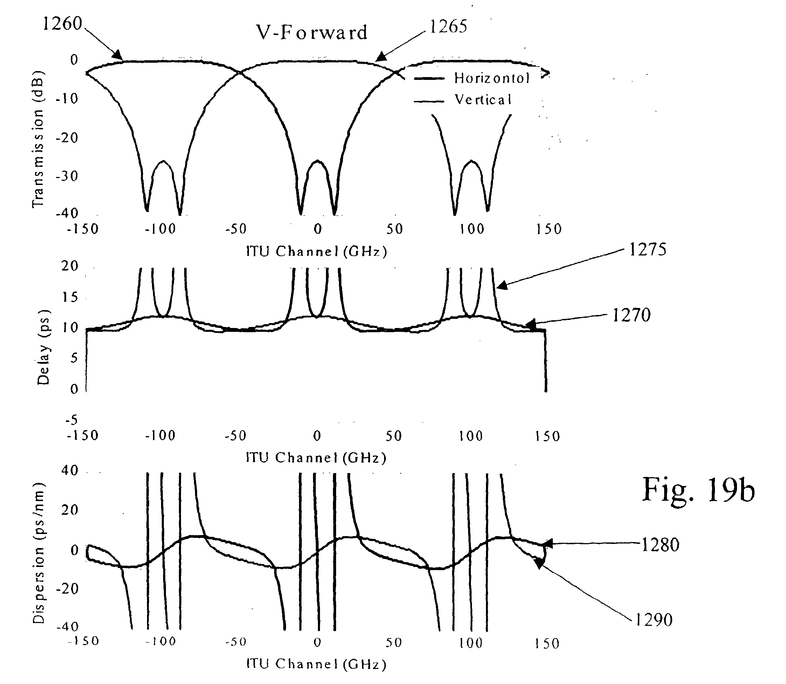

**Figure 19b** illustrates representative transmission, delay and dispersion characteristics for an interleaver/deinterleaver causing little or no dispersion for vertically polarized optical signals passing in the forward direction.

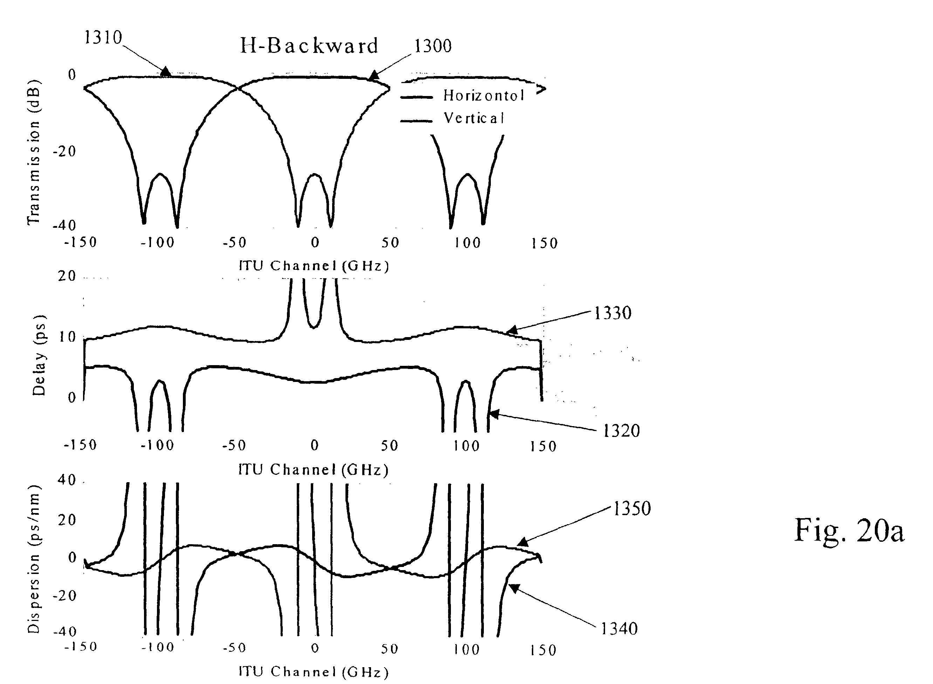

**Figure 20a** illustrates representative transmission, delay and dispersion characteristics for an interleaver/deinterleaver causing little or no dispersion for horizontally polarized optical signals passing in the backward direction.

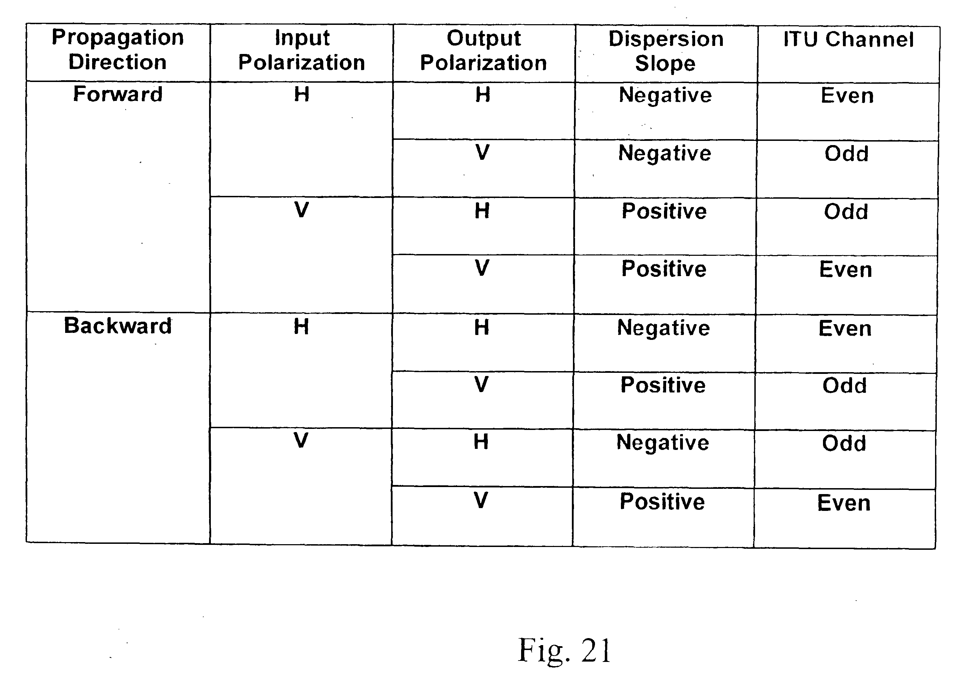

**Figure 21** is a table summarizing one approach to providing reduced or no dispersion in an optical interleaver/deinterleaver.

### DETAILED DESCRIPTION

Folded interleaver/deinterleavers causing little or no dispersion of optical signals are described. In the following description, for purposes of explanation, numerous specific details are set forth in order to provide a thorough understanding of the invention. It will be apparent, however, to one skilled in the art that the invention can be practiced without these specific details. In other instances, structures and devices are shown in block diagram form in order to avoid obscuring the invention.

Reference in the specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment.

Interleaver/deinterleaver apparatuses for combining/separating optical channels are described. An interleaver/deinterleaver apparatus is described as folded when an optical signal follows an optical path that passes through a birefringent assembly multiple times. Double-pass refers to the optical signal following a (folded) path through the birefringent assembly twice. Multi-pass refers to the optical signal following a (folded) path through the birefringent assembly three or more times. When operating as an deinterleaver, the interleaver/deinterleaver separates an optical signal (e.g., WDM signal) into subsets of optical signals (e.g., channels). In one embodiment, deinterleaving optical signals separates an optical signal into even and odd International Telecommunications Union (ITU) channels.

When operating as an interleaver, the interleaver/deinterleaver mixes subsets of optical signals (e.g., channels) into a multiplexed (e.g., WDM, DWDM) optical signal. The interleaver/deinterleaver apparatus can be used to increase the bandwidth of an optical network. For example, the interleaver/deinterleaver can be used to interface components designed for a first channel spacing (e.g., 100 GHz) to components designed for a second channel spacing (e.g., 200 GHz). In one embodiment, interleaving combines even and odd ITU channels into a single optical signal.

The birefringent assemblies of folded interleaver/deinterleavers cause dispersion because the speed at which the ordinary beam of an optical signal passes through the birefringent assembly is different that the speed at which the extraordinary beam of the optical signal passes through the birefringent assembly. In order to reduce or eliminate dispersion of optical signals that make two or more passes through the birefringent assembly, the polarization of the optical signal is reversed for alternating passes through the birefringent crystal. For example, if a signal is horizontally polarized for a first pass through the birefringent crystal, the signal is rotated so that it is vertically polarized for a second pass through the birefringent crystal. For a third pass through the birefringent assembly, the signal is rotated so that it is again horizontally polarized.

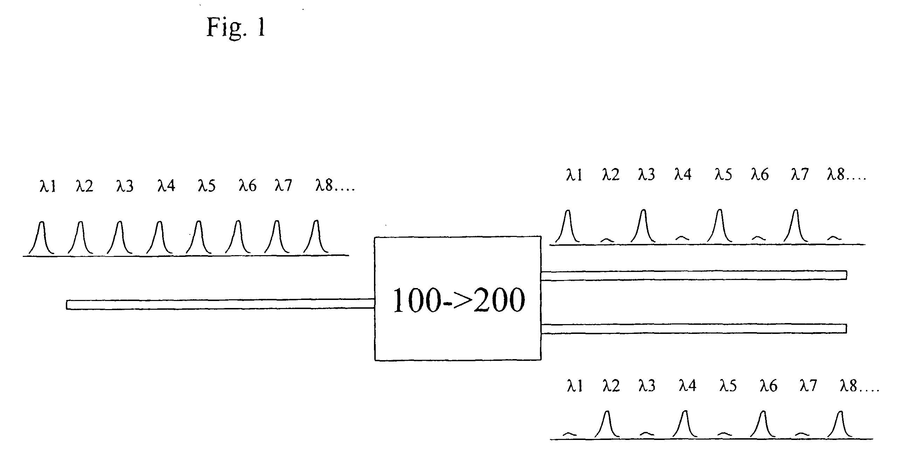

**Figure 1** is a conceptual illustration of a conversion from an optical channel scheme having 100 GHz spacing to an optical channel scheme having 200 GHz. The conversion of Figure 1 is useful, for example, to allow devices designed to operate with an optical channel scheme having 200 GHz channel spacing to interact with other devices or a network designed to operate with an optical channel scheme having 100 GHz channel spacing. Conversion between 100 GHz channel spacing and 200 GHz channel spacing allows, for example, network bandwidth to be increased without upgrading all of the devices that interact with the network.

In one embodiment, the converter of Figure 1 is a deinterleaver that separates an optical signal having even and odd channels (e.g., ITU channels) into a first optical signal including the even channels and a second optical signal including the odd channels. After the signals are deinterleaved, the odd channels have a 200 GHz spacing and the even channels have a 200 GHz spacing. Recombining the even and the odd channels into a single signal can be accomplished with an interleaver. In other words, the even and odd channels having 200 GHz spacing can be combined (interleaved) into an optical signal having 100 GHz signal spacing. Similar interleaving can be provided to convert between 100 GHz spaced channels and 50 GHz spaced channels, as well as between other sets of channel spacing schemes.

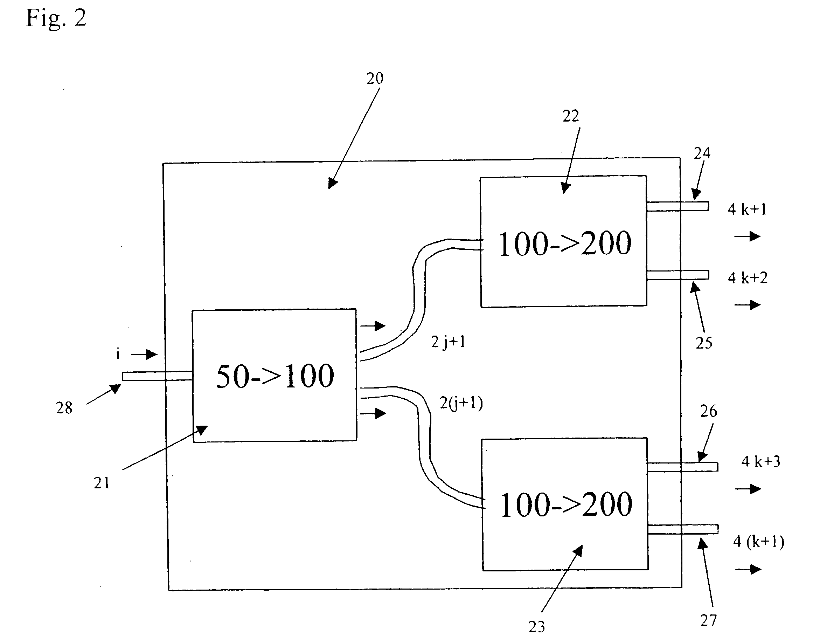

**Figure 2** is a block diagram of one embodiment of an optical deinterleaver for conversion from an optical channel scheme having 50 GHz spacing to an optical channel scheme having 200 GHz spacing. In general, deinterleaver 20 includes deinterleaver 21 to convert from one set of 50 GHz spaced channels to two sets of 100 GHz spaced channels. Deinterleaver 20 also includes two deinterleavers (22 and 23) each of which convert one of the sets of 100 GHz spaced channels to two sets of 200 GHz spaced channels. Deinterleaver 20 allows devices designed for 200 GHz spaced channels to interact with devices or networks designed for 50 GHz spaced channels.

Optical fiber 28 carries a set of optical channels *i*, having 50 GHz spacing. Deinterleaver 21 separates the set of optical channels into sets of even, 2(*j* + 1), and odd, 2*j* + 1, channels. The even channels are input to deinterleaver 23 and the odd channels are input deinterleaver 22. The even and the odd channels have 100 GHz spacing.

Deinterleavers 22 and 23 operate to further separate the set of optical channels. Conceptually, deinterleaver 22 and 23 operate on the respective 100 GHz spaced channels to separate the input channels into "even" and "odd" channels. The sets of channels output by deinterleavers 22 and 23 have 200 GHz spacing.

Deinterleaver 22 separates the odd channels into two sets of channels, odd-odd channels, 4*k* + 1, output by optical fiber 24 and odd-even, 4*k* + 2, channels output by optical fiber 25. Deinterleaver 23 separates the even channels into two sets of channels, the even-odd, 4*k* + 3, channels output by optical fiber 26 and the even-even, 4(*k* + 1), channels output by optical fiber 27.

The four sets of channels output by deinterleaver 20 are 200 GHz spaced channels. Thus, deinterleaver 20 can be used to interface one or more devices designed to operate on 200 GHz spaced channels with one or more devices or networks designed to operate on 50 GHz spaced channels. Other channel spacing can also be supported.

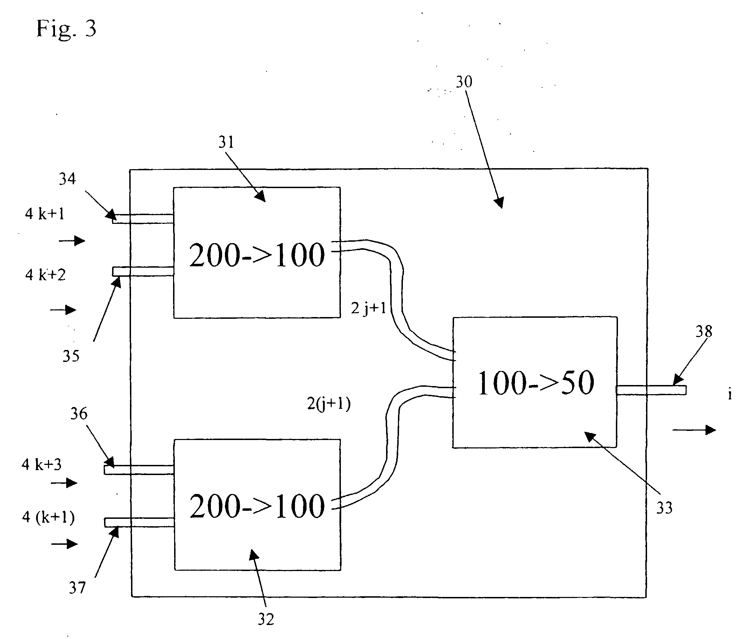

**Figure 3** is a block diagram of one embodiment of an optical interleaver for conversion from an optical channel scheme having 200 GHz spacing to an optical channel scheme having 50 GHz spacing. In general, interleaver 30 includes interleaver 31 to convert from two sets of 200 GHz spaced channels to one set of 100 GHz spaced channels. Similarly, interleaver 32 converts from two sets of 200 GHz spaced channels to one set of 100 GHz channels. Interleaver 33 converts the two sets of 100 GHz spaced channels to one set of 50 GHz spaced channels. Interleaver 30 allows devices designed for 200 GHz spaced channels to interact with devices or networks designed for 50 GHz spaced channels.

The odd-odd, 4*k* +1, channels having 200 GHz spacing are input to interleaver 31 via optical fiber 34. The odd-even, 4*k* + 2, channels having 200 GHz spacing are input to interleaver 31 via optical fiber 35. Interleaver 31 interleaves the odd-odd channels and the odd-even channels to generate a set of odd, 2*j* + 1, channels having 100 GHz spacing.

The even-odd, 4*k* + 3, channels having 200 GHz spacing are input to interleaver 32 via optical fiber 36. The even-even, 4(*k* + 1), channels having 200 GHz spacing are input to interleaver 32 via optical fiber 37. Interleaver 32 interleaves the even-odd channels and the even-even channels to generate a set of even, 2(*j* + 1), channels having 100 GHz spacing.

Interleaver 33 interleaves the even and odd channels to generate a set of channels, i, having 50 GHz spacing. Thus, interleaver 30 allows devices designed to operate on optical channels having 200 GHz spacing to interact with devices designed to operate on optical channels having 50 GHz spacing. Other channel spacing can also be supported.

**Figure 4a** is a top view of one embodiment of an optical interleaver/deinterleaver having a quarter wave mirror as a reflective element. The arrows of Figure 4a correspond to the interleaver/deinterleaver operating as a deinterleaver. In other words an optical signal carrying information on multiple frequencies, for example, a wavelength division multiplexed (WDM) signal is receives and separated into two optical signals, each of which include a predetermined subset of frequencies (e.g., even channels and odd channels) from the input optical signal.

An optical signal is received through port 100. In one embodiment, port 100 is a collimator assembly having a GRIN lens to collimate the light. Other types of lenses can also be used, or pre-collimated light can be received. The collimated light is directed to isolator 110. One embodiment of an isolator that can be used to provide isolator 110 is described in greater detail below with respect to Figures 8a and 8b; however, other isolators can be used, for example, the isolator of Figure 10.

The optical signal then passes through walk-off crystal 115, which separates the ordinary and extraordinary beams of the optical signal. One of the beams passes through half wave plate 170. Half wave plate 170 introduces a relative phase difference of 180° between the ordinary and extraordinary components of the optical signal.

The collimated optical signal is directed to birefringent element 120 through an opening between walk-off crystal 160 and walk-off crystal 165. In one embodiment, birefringent element 120 is composed of two crystals, together having an optical path length L, that are selected to provide improved thermal stability over a range of operating temperatures as compared to a single birefringent crystal. In one embodiment, one crystal is a TiO₂ crystal and the second crystal is a YVO₄ crystal, having thicknesses to provide interleaver/deinterleaver function for 100 GHz, however, other sizes can also be used for other channel spacing. Other birefringent elements can also be used, for example, a single crystal can be used if temperature stability is not important, or other two-crystal birefringent elements can be used. In one embodiment, birefringent element 120 is oriented with a 45° azimuth angle; however, other azimuth angles can also be used.

The optical signal then passes through birefringent element 125. In one embodiment, birefringent element 125 is composed of two crystals together having an optical path length of 2L. In one embodiment, one crystal is a TiO₂ crystal and the second crystal is a YVO₄ crystal. A single crystal birefringent element can also be used. In one embodiment, birefringent element 125 has an azimuth angle of-12°; however, other azimuth angles can also be used.

The optical signal then passes to walk-off crystal 130 where the ordinary and the extraordinary beams are separated. The beams then pass through quarter wave plate 140 and are reflected by quarter wave mirror 150. The combination of quarter wave plate 140 and quarter wave mirror 150 reduces the dispersion caused by the interleaver/deinter-leaver by providing orthogonal orientations for the optical signals passing in the forward direction and in the backward direction. An etalon can be used in place of quarter-wave mirror 450, to improve the isolation at the channel crossover regions and to eliminate any return loss caused by the quarter-wave mirror.

Quarter wave mirror 150 reflects the optical signal back through walk-off crystal 130, birefringent element 125 and birefringent element 120 to walk-off crystals 160 and 165. Walk-off crystal 165 directs an optical signal to walk-off crystal 185 and isolator 187 to port 195. Similarly, walk-off crystal 160 directs an optical signal to walk-off crystal 180 and isolator 182 to port 190. In most cases, walk-off crystals 160 can be replaced by simple reflective prisms.

The effect of birefringent elements 120 and 125, quarter wave plate 140 and quarter wave mirror 150 is to separate (deinterleaver) sets of optical signals having a predetermined frequency separation, free spectral range (FSR). The FSR of the channels separated can be, for example, 200 GHz or 100 GHz as specified by the International Telecommunications Union (ITU), or other FSR values (e.g., 50 GHz, 25 GHz) can be used.

To operate as an interleaver, two sets of optical signals are input to ports 190 and 195. The orientations of isolators 110, 182 and 187 are reversed as compared to the deinterleaver embodiment illustrated in Figure 4a. The two sets of optical signals are combined in a manner that is the reverse of the deinterleaver function described above. The combined (interleaved) optical signal is output through port 100. Thus, the apparatus illustrated in Figure 4a can operate as an interleaver or as a deinterleaver.

**Figure 4b** is a side view of one embodiment of an optical interleaver/deinter-leaver having a quarter wave mirror as a reflective element. As with Figure 4a, the arrows of Figure 4b correspond to operation as a deinterleaver. The side view of Figure 4b is from the side of port 190 and walk-off crystal 130.

When operating as a deinterleaver, the optical signal input to the interleaver/deinterleaver travels to walk-off crystal 130 as described above with respect to Figure 4a. Walk-off crystal 130 offsets the optical signals such that when the optical signals are reflected, one set of optical signals pass through a first portion of walk-off crystal 130 and the second set of optical signals pass through a second portion of walk-off crystal 130.

The two optical signals are reflected back to walk-off crystal 160 and walk-off crystal 165 as described above. Walk-off crystal 160 and walk-off crystal 165 shift the optical signals to be aligned with isolators 482 and 487, respectively. The signals are output through ports 490 and 495.

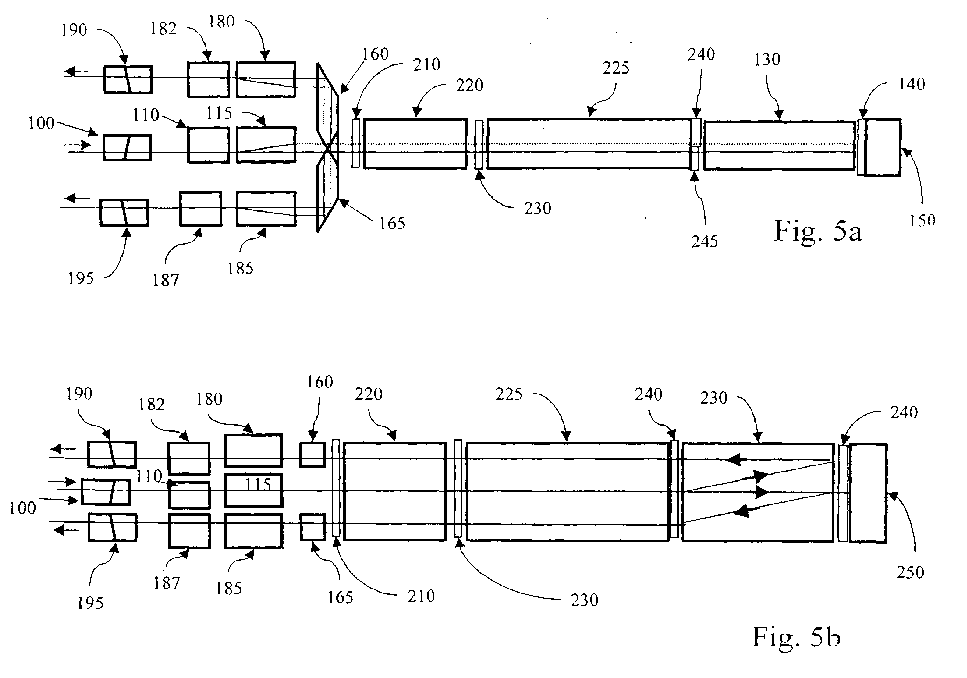

**Figure 5a** is a top view of one embodiment of an optical interleaver/deinterleaver having multiple half wave plates and a quarter wave mirror as a reflective element. The arrows of Figure 5a illustrate operation as a deinterleaver. The interleaver/deinterleaver of Figure 5a operates in a similar manner as interleaver/deinterleaver of Figures 4a and 4b except that birefringent elements 220 and 225 have azimuth angles of 0°. Half wave plates 210, 230, 240 and 245 are positioned as illustrated in Figure 5a.

Half wave plate 210 is positioned between reflective prisms 160 and 165 and birefringent element 220. In one embodiment, half wave plate 210 is oriented with an azimuth angle of 22.5°. In alternate embodiments, other azimuth angles can be used.

Half wave plate 230 is positioned between birefringent element 220 and birefringent element 225. In one embodiment, half wave plate 230 is oriented with an azimuth angle of-28.5°. In alternate embodiments, other azimuth angles, other materials and other thicknesses can be used.

Half wave plates 240 and 245 are positioned between birefringent element 225 and walk-off crystal 230. Optical signals passing from birefringent element 225 to walk-off crystal 130 pass through half wave plate 240. Optical signals passing from walk-off crystal 130 to birefringent element 225 pass through half wave plate 245. In one embodiment, half wave plates 240 and 245 are oriented with azimuth angles of-6.5° and 38.5°, respectively. In alternate embodiments, other azimuth angles, other materials and other thicknesses can be used.

To operate as an interleaver, two sets of optical signals are input to ports 190 and 195. The orientations of isolators 110, 182 and 187 are reversed as compared to the deinterleaver embodiment illustrated in Figure 4a. The two sets of optical signals are combined in a manner that is the reverse of the deinterleaver function described above. The combined (interleaved) optical signal is output through port 100. Thus, the apparatus illustrated in Figure 4a can operate as an interleaver or as a deinterleaver.

**Figure 5b** is a side view of one embodiment of an optical interleaver/deinter-leaver having multiple half wave plates and a quarter wave mirror as a reflective element. As with Figure 5a, the arrows of Figure 5b correspond to operation as a deinterleaver. The side view of Figure 5b is from the side of port 190 and walk-off crystal 130.

When operating as a deinterleaver, the optical signal input to the interleaver/deinterleaver travels to walk-off crystal 130 as described above with respect to Figure 5a. Walk-off crystal 130 offsets the optical signals such that when the optical signals are reflected, one set of optical signals passes through a first portion of walk-off crystal 130 and the second set of optical signals passes through a second portion of walk-off crystal 130.

The two optical signals are reflected back to reflective prism 160 and reflective prism 165 as described above. Reflective prisms 160 and 165 shift the optical signals to be aligned with isolators 182 and 187, respectively. The signals are output through ports 190 and 195.

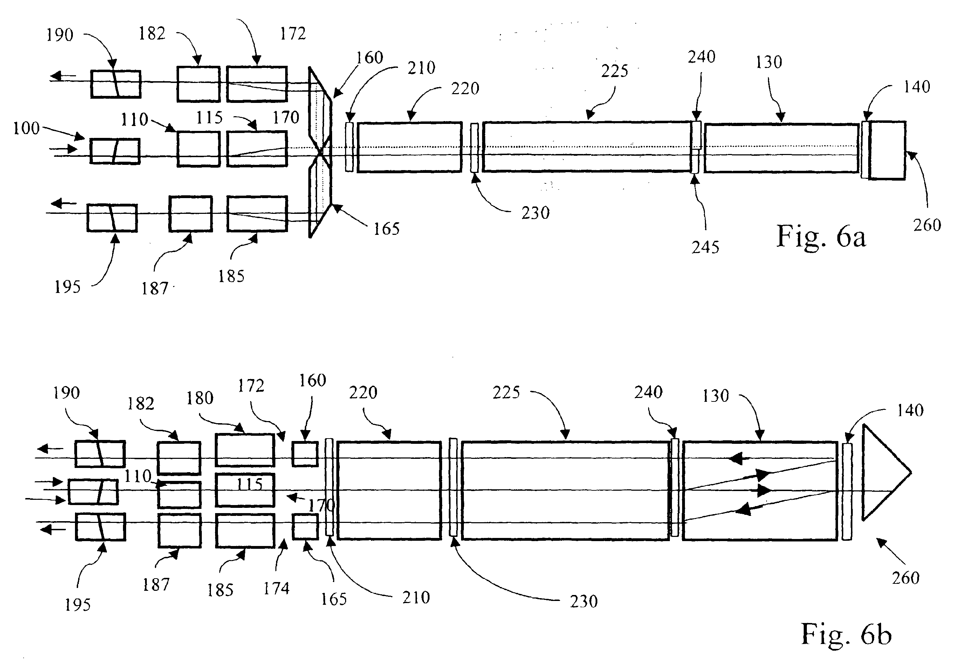

**Figure 6a** is a top view of one embodiment of an optical interleaver/deinterleaver having multiple half wave plates and a 90° prism 260 as a reflective element. The remaining components of the interleaver/deinterleaver are the same as Figures 5a and 5b. In an alternate embodiment the remaining components of the interleaver/deinterleaver can be the same as Figures 4a and 4b. **Figure 6b** is a side view of one embodiment of an optical interleaver/deinterleaver having multiple half wave plates and a 90° prism 260 as a reflective element.

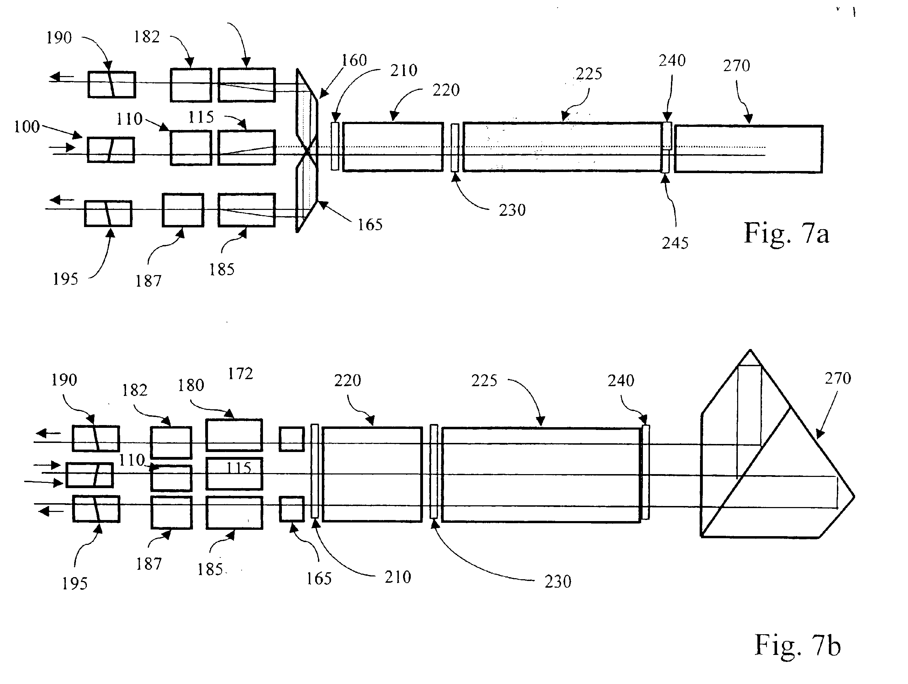

**Figure 7a** is a top view of one embodiment of an optical interleaver/deinterleaver having multiple half wave plates and a polarization beam splitter and reflective prism assembly as a reflective element 270. The remaining components of the interleaver/de-interleaver are the same as Figures 5a and 5b. In an alternate embodiment the remaining components of the interleaver/deinterleaver can be the same as Figures 4a and 4b. **Figure 7b** is a side view of one embodiment of an optical interleaver/deinterleaver having multiple half wave plates and a polarization beam splitter and reflective prism assembly 270 as a reflective element.

**Figure 8a** is a side view of an isolator structure that can be used with, for example, the interleaver/deinterleavers of Figures 4-7. In general, the isolator of Figure 8a allows optical signals to pass in one direction and separates optical signal passing in the opposite direction. The angle at which the optical signals are separated is determined by the angles of wedges 281 and 283.

In one embodiment, wedges 281 and 283 and garnet 282 are disposed within casing 280 that is a permanent magnet. In alternate embodiments, casing 280 generates an electrically controlled magnetic field. In one embodiment, garnet 282 is a 45° garnet that causes a 45° rotation in the polarization of the optical signals that pass through garnet 282.

In one embodiment, wedges 281 and 283 have wedge angles in the range of 5° to 25° (e.g., ≈ 10°). In one embodiment, wedges 281 and 283 are made of YVO₄; however, other materials can also be used. Wedges 281 and 283 have predetermined angles between the x-axis and the y-axis. In one embodiment, wedge 281 has an angle of 22.5° and wedge 283 has an angle of-22.5°. In alternate embodiments, other angles can be used. **Figure 8b** is a cross sectional view of an isolator structure that can be used with, for example, the interleaver/deinterleavers of Figures 4-7.

**Figure 9a** is a top view of one embodiment of an optical interleaver/deinterleaver having a walk-off crystal for isolation and a quarter wave mirror as a reflective element. The arrows of Figure 9a correspond to the interleaver/deinterleaver operating as a deinterleaver.

An optical signal is received through port 300. In one embodiment, port 300 is a collimator assembly having a GRIN lens to collimate the light. Other types of lenses can also be used, or pre-collimated light can be received. The collimated light is directed to walk-off crystal isolator 310. One embodiment of a walk-off crystal isolator that can be used to provide isolator 310 is described in greater detail below with respect to Figure 10.

The collimated optical signal is directed to half wave plate 320 through an opening between reflective prism 160 and reflective prism 165. In one embodiment, half wave plate 320 is oriented with an azimuth angle of 22.5°; however, other azimuth angles can also be used.

The optical signal then passes to birefringent element 325. In one embodiment, birefringent element 325 is composed of two crystals, together having an optical path length of L, that are selected to provide improved thermal stability over a range of operating temperatures as compared to a single birefringent crystal. In one embodiment, one crystal is a TiO₂ crystal and the second crystal is a YVO₄ crystal; however, other crystals can also be used. Other birefringent elements can also be used, for example, a single crystal can be used if temperature stability is not important, or other two-crystal birefringent elements can be used. In one embodiment, birefringent element 325 is oriented with a 0° azimuth angle; however, other azimuth angles can also be used.

The optical signal then passes through half wave plate 330. In one embodiment, half wave plate 330 is oriented with an azimuth angle of-28.5°. In alternate embodiments, other thicknesses, materials and/or azimuth angles can also be used.

The optical signal then passes through birefringent element 335 having an optical path length of 2L. In one embodiment, birefringent element 335 is composed of a TiO₂ crystal and the second crystal is a YVO₄ crystal; however, other sizes can also be used. Other birefringent elements can also be used, for example, a single crystal can be used, or other two-crystal birefringent elements can be used. In one embodiment, birefringent element 335 has an azimuth angle of 0°; however, other azimuth angles can also be used in combination with changes with other azimuth angles.

The optical signal then passes through half wave plates 340 and 342. In one embodiment, half wave plate 340 has an azimuth angle of-6.5° and half wave plate 342 has an azimuth angle of 38.5°; however, other azimuth angles can be used. The optical signal then passes to walk-off crystal 345 where the ordinary and the extraordinary beams are separated. The beams then pass through quarter wave plate 350 and are reflected by quarter wave mirror 360.

Quarter wave mirror 360 reflects the optical signal back through walk-off crystal 340, birefringent elements 335 and 325 and half wave plates 340, 342, 330 and 320 to reflective prisms 370 and 375. Reflective prism 370 directs an optical signal to walk-off crystal 380 to port 390. Similarly, reflective prism 375 directs an optical signal to walk-off crystal 385 to port 395.

To operate as an interleaver, two sets of optical signals are input to ports 390 and 395. The two sets of optical signals are combined in a manner that is the reverse of the deinterleaver function described above. The combined (interleaved) optical signal is output through port 300. Thus, the apparatus illustrated in Figure 9a can operate as an interleaver or as a deinterleaver.

**Figure 9b** is a side view of one embodiment of an optical interleaver/de-interleaver having a walk-off crystal for isolation and a quarter wave mirror as a reflective element. The side view of Figure 4b is from the side of port 390 and walk-off crystal 380.

When operating as a deinterleaver, the optical signal input to the interleaver/deinterleaver travels to walk-off crystal 345 as described above with respect to Figure 9a. Walk-off crystal 345 offsets the optical signals such that when the optical signals are reflected, one set of optical signals passes through a first portion of walk-off crystal 345 and the second set of optical signals passes through a second portion of walk-off crystal 345.

The two optical signals are reflected back to reflective prisms 370 and 375 as described above. Reflective prisms 370 and 375 shift the optical signals to be aligned with isolators 380 and 385, respectively. The signals are output through ports 390 and 395.

The effect of birefringent elements 325 and 335, half wave plates 320, 330, 340 and 342, quarter wave plate 350 and quarter wave mirror 360 is to separate (deinterleaver) sets of optical signals having a predetermined FSR. The FSR of the channels separated can be, for example, 200 GHz or 100 GHz as specified by the ITU, or other FSR values (e.g., 50 GHz, 25 GHz) can be used.

**Figure 10** is a side view of one embodiment of a walk-off crystal-based isolator that can be used with, for example, the interleaver/deinterleaver of Figure 9. Using the isolator of Figure 10, reflected signals are not reflected to the original input position. The signal paths illustrated in the isolator of Figure 10 correspond to isolator 310 of Figures 9a and 9b. Isolators 380 and 385 operate in a similar manner.

As an input signal enters walk-off crystal 392, the ordinary and the extraordinary components of the input signal are separated. When the signal exits walk-off crystal 392, the ordinary beam and the extraordinary beam are separated by a distance that is determined by the physical characteristics of walk-off crystal 392.

The ordinary beam and the extraordinary beam pass through garnet (faraday rotator) 394. In one embodiment, garnet 394 is a 45° garnet. Garnet 394 provides 90° rotation of optical signals in the forward direction and 0° rotation of optical signals in the backward direction. The ordinary beam and the extraordinary beam then pass through half wave plate 396. Half wave plate 396 introduces a relative phase difference of 180° between the ordinary and extraordinary beams.

The ordinary and the extraordinary beam then pass through walk-off crystal 397, which offsets the beams in a predetermined manner. In one embodiment, one of the ordinary and the extraordinary beams passes through half wave plate 398. The ordinary and extraordinary beams can then be passed through other optical components, for example, the components of the interleaver/deinterleaver of Figures 9a and 9b.

For isolator 310, the optical signals following the backward path represent, for example, even and odd ITU channels. As the signals pass through walk-off crystal 397 the ordinary and the extraordinary components are separated. The signals then pass through half wave plate 396 and garnet 394. The ordinary and the extraordinary components of the signals are recombined by walk-off crystal 392.

**Figure 11a** illustrates atop view of one embodiment of a double-pass folded interleaver/deinterleaver that causes dispersion. The arrows of Figure 11a correspond to the double-pass folded interleaver/deinterleaver operating as a deinterleaver. In other words an optical signal carrying information on multiple frequencies, for example, a wavelength division multiplexed (WDM) signal is received and separated into two optical signals, each of which include a predetermined subset of frequencies (e.g., even channels and odd channels) from the input optical signal.

The cause of the dispersion is described in greater detail below. As a brief overview, the optical signal is horizontally polarized prior to the first pass through the birefringent assembly. The even and the odd channels are separated by the half wave plates and the birefringent assembly, during the first pass. The signals are then reflected and rotated for a second pass through the birefringent assembly. The birefringence of the birefringent assembly causes dispersion of the optical signal.

An optical signal is received through port 400. In one embodiment, port 400 is a collimator assembly having a GRIN lens to collimate the light and a walk-off crystal to separate the horizontally polarized and the vertically polarized components of the optical signal. Other types of lenses can also be used, or pre-collimated light can be received. Port 400 receives an optical signal via an optical fiber and collimates the optical signal with the GRIN lens.

In one embodiment, port 400 also includes half wave plate 402 to rotate either the vertically polarized component or the horizontally polarized component of the optical signal. In one embodiment, half wave plate 402 has an azimuth angle of 45° with respect to an optical signal received by port 400 from optical fiber 404. In one embodiment, the walk-off crystal of port 400 offsets the vertically polarized component of the optical signal and half wave plate 402 causes the vertically polarized component to be horizontally polarized such that both components are horizontally polarized when the components pass through polarizer 405.

The collimated optical signal is directed to polarizer 405 through an opening between walk-off crystal 480 and walk-off crystal 482. In one embodiment, polarizer 405 provides polarization in the range of 0° to 15° (e.g., 2.6°) for optical signals passing from port 400 to birefringent assembly 420, however, other polarizations can be provided based on, for example, the azimuth angles of one or more half wave plates.

After passing through polarizer 405, the optical signal is directed to birefringent assembly 420. In one embodiment, birefringent assembly 420 is composed of crystals 424 and 426 that are selected to provide improved thermal stability over a range of operating temperatures as compared to a single birefringent crystal. In one embodiment, crystal 424 is a TiO₂ crystal having a thickness of 2 mm, and crystal 426 is a YVO₄ crystal having a thickness of 9.5 mm; however, other sizes can also be used. Other birefringent assemblies can also be used, for example, a single crystal can be used if temperature stability is not important, or other two-crystal birefringent assemblies can be used.

After passing through birefringent assembly 420, the optical signal is reflected by reflective element 450. In one embodiment, reflective element 450 is a 90° reflecting crystal; however, other reflective elements can be used based on, for example, the physical layout of the interleaver/deinterleaver. In one embodiment, the face(s) through which the optical signal is received and/or reflected has a low-order compensator 440 and 442 (see Fig 16a) to compensate for phase shift in the respective crystals. In alternate embodiments, the low-order compensator can be omitted.

The optical signal reflected by reflective element 450 is directed through birefringent assembly 420 to reflective element 452. After being reflected by reflective element 452, the optical signal passes through half wave plate 430. In one embodiment, half wave plate 430 is oriented with the an azimuth angle in the range of 0° to -15° (e.g.,-6.5°) for optical signals passing from birefringent assembly 420 to reflective element 450. Other azimuth angles for half wave plate 430 can be used for different filtering characteristics or physical configurations. Half wave plate 430 introduces a relative phase difference of 180° between the ordinary and extraordinary components of the optical signal.

After passing through birefringent assembly 420 as reflected by reflective element 452, the optical signal passes through half wave plate 434 and tuning plate 435. In one embodiment, half wave plate 434 has an azimuth angle is in the range of 15° to 30° (e.g., 22.5°) for optical signals passing from to birefringent assembly 420 to walk-off crystal 460. Other azimuth angles for half wave plate 434 can be used for different filtering characteristics or physical configurations. Other suitable means of rotating the polarization of the optical signals can also be used, e.g. Faraday rotators.

Tuning plate 435 is used to tune the interleaver/deinterleaver. The thickness of tuning plate 435 is chosen to center the passbands of the interleaver/deinterleaver around desired frequencies. By selecting the appropriate thickness and optical-axis orientation, the tuning plate can be used to tune the optical device to a precision that is unavailable through manufacturing specifications and tolerances of the components of the optical device alone. In one embodiment tuning plate 435 is made of quartz (SiO₂); however, other suitable materials can be used. Quartz has a relatively small birefringence, therefore tuning plates made with quartz can be thicker, and manufactured more precisely than the components of the optical devices. All of the interleavers/deinterleavers described herein can be tuned with tuning plates; however for simplicity only those in Figs. 11, 12, 13 and 14 are illustrated with tuning plates 435.

When the optical signal is traveling from birefringent assembly 420, the optical signal passes between half wave plates 436a and 436b. One configuration for half wave plates 436a and 436b is described in greater detail below with respect to Figure 12. In one embodiment, the azimuth angle of half wave plates 436a and 436b are in the range of 40° to 50° (e.g., 45°) for optical signals passing from walk-off crystal 460 to birefringent assembly 420; however, the azimuth angle can be different with appropriate changes to the azimuth angles of one or more other half wave plates and/or polarizer 405.

The optical signals pass through half wave plate 470 and are reflected by quarter wave mirror 472. In one embodiment, the azimuth angle of half wave plate 470 is in the range of 40° to 50° (e.g., 45°) for optical signals passing from walk-off crystal 460 to quarter wave mirror 472; however, the azimuth angle can be different with appropriate changes to the azimuth angles of one or more other half wave plates and/or polarizer 405. The effect of walk-off crystal 460 is described in greater detail below with respect to Figure 12. Quarter wave mirror 472 reflects the optical signals back through walk off crystal 460. Quarter wave mirror 472 also introduces a phase shift of 90° to the ordinary and extraordinary components of the optical signal.

Half wave plates 436a and 436b rotate the optical signal components to an orthogonal polarization. After passing through half wave plates 436a and 436b, the optical signals pass through birefringent assembly 420, through half wave plate 430, and are reflected by reflective element 452 through half wave plate 432 to reflective element 450. Reflective element 450 reflects the signals through birefringent assembly 420, and polarizer 405 to walk-off crystals 480 and 482. Walk-off crystals 480 and 482 direct the optical signals to ports 490 and 492, respectively.

Port 490 includes half wave plate 496, and port 492 includes half wave plate 494. In one embodiment, both half wave plate 494 and half wave plate 496 have azimuth angles of 45° with respect to optical signals received from walk-off crystal 482 and walk-off crystal 480, respectively. Half wave plate 494 and 496 rotate the optical components received such that ports 492 and 490, respectively, each receive a vertically polarized component and a horizontally polarized component, which are combined and directed to optical fibers 493 and 495, respectively.

The interleaver/deinterleaver of Figure 11a has two sources of dispersion. The first source of dispersion is birefringent assembly 420. During the first pass through birefringent assembly 420, both the ordinary and the extraordinary beams of the optical signal are horizontally polarized. During the first pass through the birefringent assembly one of the beams travels faster than the other beam, which causes dispersion. During the second pass through the birefringent assembly, the same beam travels faster, which increases the dispersion. In other words, double-pass interleaver/de-interleavers cause twice the dispersion of a single-pass interleaver/deinterleaver.

The second source of dispersion is unequal optical path lengths for the ordinary and extraordinary beams. In Figure 11a, the extraordinary beam is illustrated with a dashed line. In each of the walk-off crystals in ports 400, 490 and 492, the extraordinary beam has a longer optical path length than the ordinary beam. This is referred to as polarization mode dispersion (PMD).

For the optical device of Figure 11a to operate as an interleaver, two sets of optical signals are input to ports 490 and 492. The two sets of optical signals are combined in a manner that is the reverse of the deinterleaver function described above. The combined (interleaved) optical signal is output through port 400. Thus, the apparatus illustrated in Figure 4 can operate as an interleaver or as a deinterleaver.

In one embodiment, the interleaver/deinterleaver of Figure 11a is angle tuned to compensate for manufacturing tolerances. In one embodiment, angle tuning is accomplished by rotating birefringent assembly 420 after the interleaver/deinterleaver has been assembled so that the signals (e.g., ITU channels) interleaved or deinterleaved match the desired characteristics. Birefringent assembly 420 is rotated to increase the optical path length of the signals passing through birefringent assembly 420. Tuning plates, e.g. tuning plate 435, can also be provided to enable fine tuning of the apparatus. When the desired optical path length is provided, birefringent assembly 420 is maintained in the desired position through, for example, use of epoxy or soldering techniques.

**Figure 11b** illustrates atop view of one embodiment of a double-pass folded interleaver/deinterleaver that causes dispersion. The interleaver/deinterleaver of Figure 11b operates in the same manner as the interleaver/deinterleaver of Figure 11a, except that the optical path lengths for the ordinary and extraordinary beams are equal. In the deinterleaver input port 400, the walk-off crystal causes the extraordinary beam to have a greater optical path length than the ordinary beam. In the deinterleaver output ports 490 and 492, the walk-off crystals cause the ordinary beam to have a greater optical path length than the extraordinary beam. When operating as an interleaver, the input and output ports have reverse roles as compared to those described above for the deinterleaver. A second tuning plate 435 is also provided adjacent the birefringent assembly 420 to enable added adjustment of the device.

**Figure 12** illustrates a side view of one embodiment of the double-pass folded interleaver/deinterleaver of Figures 11a and 11b. The side view of Figure 12 is from the side of port 490 and walk-off crystal 460.

When operating as a deinterleaver, the optical signal input to the interleaver/deinterleaver travels through birefringent assembly 420 to half wave plate 430 and walk-off crystal 460 as described above with respect to Figures 11a and 11b. Walk-off crystal 460 offsets the optical signals such that when the optical signals are reflected, one set of optical signals passes through half wave plate 436a and the second set of optical signals passes through half wave plate 436b.

The two optical signals are reflected back to walk-off crystal 480 and walk-off crystal 482 as described above. Walk-off crystal 480 and walk-off crystal 482 shift the optical signals to be aligned with ports 490 and 492. The signals are output through ports 490 and 492.

The polarization states of the optical signals are described in greater detail below. In one embodiment, vertically polarized signals are offset by walk-off crystal 460 while horizontally polarized signals are passed without change to the optical path. In Figure 12, the signals passing through and from walk-off crystal 460 are labeled with polarizations (e.g., "H", "V") for purposes of explanation. Other embodiments can be provided.

In one embodiment, after passing through birefringent assembly 420 a sufficient number of times, even channels are vertically polarized and odd channels are horizontally polarized. Half wave plate 470 causes a 90° rotation as the beams pass from left to right, quarter wave mirror causes another 90° rotation and half wave plate 470 causes a 90° rotation as the beams pass from right to left for a total of 270° of rotation, which essentially switches the polarization of the even and odd channels (i.e., odd channels are vertically polarized and even channels are horizontally polarized). Half wave plates 436a and 436b cause a 90° rotation for the respective beams. Thus, the combination of walk-off crystal 460, half wave plate 470, quarter wave mirror 472 and half wave plates 436a and 436b result in a 360° rotation of the beams, which means that the second pass through birefringent assembly 420 the beams have the same polarization as the first pass.

To operate as an interleaver, two sets of optical signals are input to ports 490 and 492. The two sets of optical signals are combined in a manner that is the reverse of the deinterleaver function described above. The combined (interleaved) optical signal is output through port 400. Thus, the apparatus illustrated in Figures 11a and 11b can operate as an interleaver or as a deinterleaver.

**Figure 13** illustrates a top view of one embodiment of a double-pass folded, dispersion-free interleaver/deinterleaver. The interleaver/deinterleaver of Figure 13 operates in the same manner as the interleaver/deinterleaver of Figure 11b, except that the even and odd channels each have a first polarization (e.g., even channels are vertically polarized and odd channels are horizontally polarized) as a result of passing through birefringent assembly 420. Prior to a return passage through birefringent assembly 420, the even and odd channels have the reverse polarization (e.g., even channels are horizontally polarized and even channels are vertically polarized).

As the beams pass through walk-off crystal 460 and half wave plate 470 to quarter wave mirror 472 and are reflected back through half wave plate 470 and walk-off crystal 460, a combined 270° of rotation occurs, which switches the polarizations of the even and odd channels. Because half wave plates 436a and 436b are absent, the polarizations of the even and odd channels have a different polarization. As described in greater detail below, the dispersions of the first pass and the second pass offset to result in a dispersion-free or nearly dispersion-free interleaver/deinterleaver.

**Figure 14** illustrates a side view of one embodiment of the double-pass folded interleaver/deinterleaver of Figure 13. Because half wave plates 436a and 436b of the interleaver/deinterleavers of Figures 11a and 11b are absent, the interleaver/deinterleaver of Figure 13 causes significantly less dispersion than the interleaver/deinterleavers of Figures 11a and 11b.

**Figure 15** illustrates a cross-sectional view of polarization states of a double-pass optical interleaver/deinterleaver as illustrated in Figures 13 and 14. With respect to Figure 15, a forward pass cross-sectional view refers to an illustration of the polarization states of one or more optical signals as the signal(s) pass from the input port(s) to quarter wave mirror 472. A backward pass cross-sectional view refers to an illustration of the polarization states of one or more signals as the signal(s) pass from quarter wave mirror 472 to the output port(s).

State 800 represents the input/output ports 400, 490 and 492 of Figures 13 and 14 having input/output signals 800, 890 and 892, respectively. The input and output port receive and send, respectively, optical signals having both horizontal and vertical components. The arrows of Figure 15 indicate the polarization state sequence for a deinterleaver.

State 810 is the forward pass cross-sectional view of input optical signal 880 between walk-off crystals 480 and 482 and polarizer 405. In one embodiment, input port 400 includes a walk-off crystal to separate the input signal into two beams and a half wave plate to rotate one of the beams 90° so that both beams are horizontally polarized.

State 820 is the forward pass cross-sectional view of output optical signals 690 and 692 between birefringent assembly 420 and tuning plate 435. In state 820 output optical signal 890 has two vertically polarized components and output optical signal 892 has two horizontally polarized components. In one embodiment, the vertically polarized components correspond to even channels and the horizontally polarized components correspond to odd channels. In alternate embodiments, the vertically polarized components correspond to odd channels and the vertically polarized components correspond to even channels.

State 830 is the forward pass cross-sectional view of the output optical signal 890 and 892 between walk-off crystal 460 and half wave plate 470. In state 830, the vertical components of output optical signal 890 have been offset by walk-off crystal 460. State 840 is the backward pass cross-sectional view of output optical signals 890 and 892 between half wave 470 and walk-off crystal 460. In state 840 both components of both output optical signals have been rotated 90° by quarter wave mirror 472.

State 850 is the backward pass cross-sectional view of output optical signals 890 and 892 between tuning plate 435 and birefringent assembly 420. Both components of output optical signal 892 have been shifted by walk-off crystal 460. The components have the opposite polarization as compared to the first pass through tuning plate 435.

State 860 is the backward pass cross-sectional view of output optical signals 890 and 892 between polarizer 405 and walk-off crystals 480 and 482. Both output optical signals 890 and 892 have two horizontally polarized components that are aligned with walk-off crystals 480 and 482, respectively.

State 870 is the backward pass cross-sectional view of output optical signals 890 and 892 between walk-off crystals 480 and 482 and ports 492 and 490. Walk-off crystals 480 and 482 provide offset to align output optical signals 880 and 882 with ports 490 and 492, respectively.

**Figure 16a** illustrates a top view of one embodiment of a multi-pass optical interleaver/deinterleaver that causes dispersion. In the multi-pass optical interleaver/deinterleaver of Figure 16a, the optical signals make the first pass through the interleaver/deinterleaver to quarter wave mirror 472 in the same manner as with the interleaver/deinterleaver of Figure 11a.

Quarter wave mirror 472 reflects the signals back thorough birefringent assembly 420 in the same manner as the interleaver/deinterleaver of Figure 11a except that rather than being received and offset by walk off crystals 480 and 482, the optical signals pass through half wave plate 410 and polarizer 405, and are reflected by quarter wave mirrors 780. Quarter wave mirrors 780, and half wave plates 405 and 410 rotate the optical signals. The optical signals are reflected back through birefringent assembly 420 in a similar manner as described above through half wave plates 436a and 436b to ports 790 and 792. Dispersion is caused in the same manner as the interleaver/deinterleaver of Figure 11a.

Ports 790/792 (port 792 is behind port 790 and therefore obscured in the illustration of Figure 16a) include half wave plates 794/796, respectively. In one embodiment, both half wave plate 794 and half wave plate 796 have azimuth angles of 45° with respect to optical signals received from walk-off crystal 460. Half wave plates 794 and 796 rotate the optical components received such that ports 792 and 790, respectively, each receive a vertically polarized component and a horizontally polarized component, which are combined and directed to optical fibers.

To operate as an interleaver, two sets of optical signals are input to ports 790 and 792. The two sets of optical signals are combined in a manner that is the reverse of the deinterleaver function described above. The combined (interleaved) optical signal is output through port 400. Thus, the apparatus illustrated in Figure 16a can operate as an interleaver or as a deinterleaver.

In one embodiment, the interleaver/deinterleaver of Figure 16a is angle tuned to compensate for manufacturing tolerances. In one embodiment, angle tuning is accomplished by rotating birefringent assembly 420 after the interleaver/deinterleaver has been assembled so that the signals (e.g., ITU channels) interleaved or deinterleaved match the desired characteristics. Birefringent assembly 420 is rotated to increase the optical path length of the signals passing through birefringent assembly 420. When the desired optical path length is provided, birefringent assembly 420 is maintained in the desired position through, for example, use of epoxy or soldering techniques.

Low order compensators 440 and 442 are provided to compensate for phase shift in the reflective elements 450 and 452, respectively. If the reflective elements do not cause a phase shift the compensators 440 and 442 can be omitted.

**Figure 16b** illustrates a top view of one embodiment of a multi-pass optical interleaver/deinterleaver causing reduced dispersion as compared to the interleaver/de-interleaver of Figure 16a. Because optical signals make three passes through the interleaver/deinterleaver of Figure 16a, the resulting dispersion to the optical signals is three times the dispersion to an optical signal that makes a single pass through the device for the reasons described above.

**Figure 17a** illustrates a side view of the multi-pass optical interleaver/deinter-leaver of Figure 16a. As mentioned above, the optical signals make the first pass through the interleaver/deinterleaver to quarter wave mirror 472 in the same manner as with the interleaver/deinterleaver of Figure 11a.

Walk-off crystal 460 offsets the optical signals and quarter wave mirrors 780 reflect the optical signals back through birefringent assembly 420 as described above. The optical signals are reflected back through birefringent assembly 420 in a similar manner as described above to walk-off crystals 890 and 892, which offset optical signals to ports 790 and 792, respectively.

**Figure 17b** illustrates a side view of the multi-pass optical interleaver/deinter-leaver of Figure 16b. Because the polarization of the optical signals that pass through the interleaver/deinterleaver of Figures 16b and 17b is reversed for each pass through the device, the dispersion of the optical signal is equal to the dispersion caused by a single pass through the interleaver/deinterleaver. As a general matter, signals that make an even number of passes through the interleaver/deinterleaver have little or no dispersion and signals that make an odd number of passes through the interleaver/deinterleaver have the dispersion of a single pass through the interleaver/deinterleaver.

**Figure 18a** illustrates atop view of one embodiment of a double-pass folded interleaver/deinterleaver that causes dispersion. The interleaver/deinterleaver of Figure 15a includes the same components (e.g., reflective elements, half wave plates, birefringent assembly) as the interleaver/deinterleaver of Figure 11a with the addition of reflective elements 800 and 810 and half wave plates 433 and 431. In one embodiment, half wave plate 433 has an azimuth angle of 22.5° for optical signals passing form reflective element 450 to birefringent assembly 420 and half wave plate 431 has an azimuth angle of 22.5° for optical signals passing from reflective element 800 to birefringent assembly 420.

In one embodiment, the components are arranged in different physical positions for the interleaver/deinterleaver of Figure 18a compared to the interleaver/deinterleaver of Figure 11a to provide similar functionality. The interleaver/deinterleaver of Figure 18a provides improved filtering as compared to Figure 11a because optical signals are passed through birefringent assembly 420 a greater number of times. However, because of the presence of half wave plates 436a and 436b, the interleaver/deinterleaver of Figure 18a causes dispersion to optical signals.

In one embodiment, the interleaver/deinterleaver of Figure 18a does not include the low-order compensators 440 and 442 of the interleaver/deinterleaver of Figure 16a. The optical compensation of the low-order compensators can be provided by angle tuning birefringent assembly 420. The increase optical path length through material of the interleaver/deinterleaver can be provided by birefringent assembly 420 rather than by the low-order compensators. In an alternate embodiment, the interleaver/deinterleaver of Figure 18a can include low-order compensators 440 and 442 as described above with respect to Figure 16a.

**Figure 18b** illustrates a top view of one embodiment of a double-pass folded interleaver/deinterleaver that causes little or no dispersion. The interleaver/deinterleaver of Figure 18b is the same as the interleaver/deinterleaver of Figure 18a except that the interleaver/deinterleaver of Figure 18b does not include half wave plates 436a and 436b. The absence of half wave plates 436a and 436b allows the interleaver/deinterleaver of Figure 18b to cause little or no dispersion.

**Figure 19a** illustrates representative transmission, delay and dispersion characteristics for an interleaver/deinterleaver causing little or no dispersion for horizontally polarized optical signals passing in the forward direction. Lines 1200 and 1210 represent transmission (in dB) characteristics for horizontally and vertically polarized signals, respectively. In the graph of Figure 19a, a pass band for horizontally polarized signals is centered around 0 GHz. Similarly, pass bands for vertically polarized signals is centered around -100 GHz and 100 GHz. Thus, the transmission characteristics of the interleaver are periodic with a free spectral range (FSR) of 100 GHz. Other FSRs can also be supported.

Lines 1220 and 1230 represent delay (in Pico seconds) of horizontally and vertically polarized optical signals, respectively, that pass through the interleaver/de-interleaver. Lines 1240 and 1250 represent dispersion (in Pico seconds per nanometer) of horizontally and vertically polarized optical signals, respectively, that pass through the interleaver/deinterleaver. Note that dispersion is small at frequencies corresponding to the pass bands for the associated optical signals.

**Figure 19b** illustrates representative transmission, delay and dispersion characteristics for an interleaver/deinterleaver causing little or no dispersion for vertically polarized optical signals passing in the forward direction. Lines 1260 and 1265 represent transmission (in dB) characteristics for horizontally and vertically polarized signals, respectively. In the graph of Figure 19b, a pass band for vertically polarized signals is centered around 0 GHz. Similarly, a pass band for horizontally polarized signals is centered around -100 GHz and 100 GHz. Thus, the transmission characteristics of the interleaver are periodic with a free spectral range (FSR) of 100 GHz. Other FSRs can also be supported.

Lines 1270 and 1275 represent delay (in Pico seconds) of horizontally and vertically polarized optical signals, respectively, that pass through the interleaver/de-interleaver.

Lines 1280 and 1290 represent dispersion (in Pico seconds per nanometer) of horizontally and vertically polarized optical signals, respectively, that pass through the interleaver/deinterleaver. Note that dispersion is small at frequencies corresponding to the passbands for the associated optical signals.

**Figure 20a** illustrates representative transmission, delay and dispersion characteristics for an interleaver/deinterleaver causing little or no dispersion for horizontally polarized optical signals passing in the backward direction. Lines 1300 and 1310 represent transmission (in dB) characteristics for horizontally and vertically polarized signals, respectively. In the graph of Figure 20a, a pass band for horizontally polarized signals is centered around 0 GHz. Similarly, pass bands for vertically polarized signals is centered around -100 GHz and 100 GHz. Thus, the transmission characteristics of the interleaver are periodic with a free spectral range (FSR) of 100 GHz. Other FSRs can also be supported.

Lines 1320 and 1330 represent delay (in Pico seconds) of horizontally and vertically polarized optical signals, respectively, that pass through the interleaver/de-interleaver. Lines 1340 and 1350 represent dispersion (in Pico seconds per nanometer) of horizontally and vertically polarized optical signals, respectively, that pass through the interleaver/deinterleaver.

Note that dispersion is small at frequencies corresponding to the pass bands for the associated optical signals. Also note that the dispersion for the horizontally polarized input signal traveling in the backward direction is the inverse of the vertically polarized input signal traveling in the forward direction. Thus, the two dispersions cancel each other.

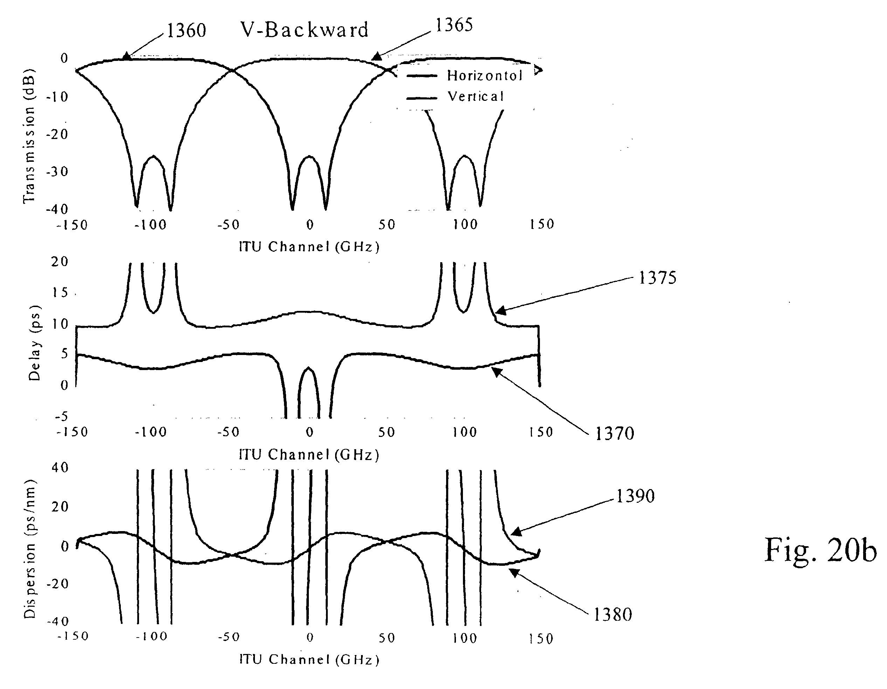

**Figure 20b** illustrates representative transmission, delay and dispersion characteristics for an interleaver/deinterleaver causing little or no dispersion for vertically polarized optical signals passing in the forward direction. Lines 1360 and 1365 represent transmission (in dB) characteristics for horizontally and vertically polarized signals, respectively. In the graph of Figure 20b, a pass band for vertically polarized signals is centered around 0 GHz. Similarly, a pass band for horizontally polarized signals is centered around -100 GHz and 100 GHz. Thus, the transmission characteristics of the interleaver are periodic with a free spectral range (FSR) of 100 GHz. Other FSRs can also be supported.

Lines 1370 and 1375 represent delay (in Pico seconds) of horizontally and vertically polarized optical signals, respectively, that pass through the interleaver/de-interleaver. Lines 1380 and 1390 represent dispersion (in Pico seconds per nanometer) of horizontally and vertically polarized optical signals, respectively, that pass through the interleaver/deinterleaver.

Note that dispersion is small at frequencies corresponding to the pass bands for the associated optical signals. Also note that the dispersion for the vertically polarized input signal traveling in the backward direction is the inverse of the horizontally polarized input signal traveling in the forward direction. Thus, the two dispersions cancel each other.

**Figure 21** is a table summarizing one approach to providing reduced or no dispersion in an optical interleaver/deinterleaver. Propagation direction refers to the direction through the birefringent assembly of the interleaver/deinterleaver. The forward direction corresponds to the first pass of the optical signal through the interleaver/deinter-leaver, which may be multiple passes through the birefringent assembly. For example, referring back to Figure 13, as the optical signal passes from fiber 404 to quarter wave mirror 472, the optical signal is traveling in the forward direction. When the optical signal is reflected by quarter wave mirror 472 and passes back to walk-off crystals 480 and 482, the optical signal is traveling in the backward direction.

Input polarization refers to the polarization of optical signals as the optical signals pass from a walk-off crystal toward the half wave plates and birefringent assembly. For example, in Figure 13, the input polarization in the forward direction refers to the polarization of the optical signals immediately before the optical signals pass through polarizer 405. Output polarization refers to the polarization of the optical signals as received by a walk-off crystal at the end of the first pass. For example, in Figure 13, output polarization in the forward direction refers to the polarization of the optical signals immediately before the optical signals pass through walk-off crystal 460.

In the backward direction, the input and output polarizations are reversed. For example, in Figure 13, the input polarization in the backward direction refers to the polarization of the optical signals immediately after passing out of walk-off crystal 460. Output polarization in the backward direction refers to the polarization of the optical signals immediately after passing through polarizer 405.

The dispersion slope refers to the dispersion caused by the pass through interleaver/deinterleaver for the appropriate passband, as described in greater detail above with respect to Figures 19a, 19b, 20a and 20b. The ITU channel refers to the channels as defined by the International Telecommunications Union. Any channels spacing, or FSR, can be used.

For a double-pass interleaver/deinterleaver to be dispersion free or nearly dispersion free, the input and output polarizations for the forward and backward direction should be equal. In other words, one input polarization and one output polarization should be horizontal, and one input polarization and one output polarization should be vertical. The ordering of polarizations is not important.

For example, assuming a horizontally polarized input signal in the forward direction both the even and odd channels are horizontally polarized (H). At the output of the forward pass the even channels are horizontally polarized (H-H) and the odd channels are vertically polarized (H-V).

In the backward direction the polarizations of the optical signals are switched, as described above. Thus, the input polarization for the even channels is vertical (H-H-V) and the input polarization for the odd channels is horizontal (H-V-H). The output polarization for the even channels is vertical (H-H-V-V) and the output polarization for the odd channels is also vertical (H-V-H-V). Other configurations can also be used.

For multi-pass interleaver/deinterleavers, a similar pattern is used so that the dispersion of the first 2N passes cancel each other such that the dispersion small or non-existent. For the final pass through the interleaver/deinterleaver, some amount of dispersion is caused by the birefringence of the interleaver/deinterleaver. However, the dispersion can be reduced as compared to non-alternating polarizations.

In the foregoing specification, the invention has been described with reference to specific embodiments thereof. It will, however, be evident that various modifications and changes can be made thereto without departing from the broader spirit and scope of the invention. The specification and drawings are, accordingly, to be regarded in an illustrative rather than a restrictive sense.

## Claims

1. An interleaver/deinterleaver apparatus comprising:
a first port for inputting or outputting a first polarized optical signal, which comprises a second optical signal with a first subset of channels and a third optical signal with a second subset of channels;
a second port for outputting or inputting the second optical signal;
a third port for outputting or inputting the third optical signal;
a birefringent assembly optically coupled to the first, second and third ports, whereby after a first pass through the birefringent assembly the second signal exits the birefringent assembly with a polarization orthogonal to the polarization of the third signal;
first beam splitting/combining means for separating the first signal input from the first port into the second signal and the third signal, or for combining the second signal input from the second port with the third signal input from the third port into the first signal; and
first reflecting means for directing the second and third signals separately back through the birefringent assembly for a second pass along second and third paths, respectively, which are substantially parallel to a first path taken by the first signal, for output via the second and third ports, respectively, or for reflecting the second and third signals, which traveled the second and third paths during a first pass, back together through the birefringent assembly for a second pass along the first path.

2. The apparatus according to claim 1, further comprising first beam rotating means between the birefringent assembly and the first reflecting means for changing the polarization of the second and third signals, whereby the polarizations of the second and third signals entering the birefringent assembly for the second pass are orthogonal to the polarizations of the second and third signals, respectively, after the first pass.

3. The apparatus according to claim 2, wherein the first beam-splitting means is a walk-off crystal; and
wherein the first beam-rotating means is positioned between the walk-off crystal and the first reflecting means;
whereby, when the first signal enters the walk-off crystal, the third signal gets walked off from the second signal, and the polarizations of both signals get rotated and directed back through the walk-off crystal, wherein the second and third signals diverge farther apart to meet the second and third paths, or whereby, when the second and third signals enter the walk-off crystal the second signal gets walked towards the third signal, and the polarizations of both signals get rotated and directed back through the walk-off crystal, wherein the second and third signals converge together to meet the first path.

4. The apparatus according to claim 1, 2 or 3, further comprising second reflecting means for directing the second and third signals from the first reflecting means back through the birefringent assembly for a third pass for output via the second and third ports, respectively, or for reflecting the second and third signals from the second and third ports, respectively, through the birefringent assembly to the first reflecting means.

5. The apparatus according to any one of claims 1 to 4, wherein the birefringent assembly is comprised of two elements, a first element having an optical path length L, and a second element having an optical path length 2L; wherein the first element has a different azimuth angle than the second element, or wherein the first element has substantially the same azimuth angle as the second element and the birefringent assembly further comprises second beam-rotating means positioned between the first and second elements at a predetermined azimuth angle different than the azimuth angle of the first and second elements

6. The apparatus according to any one of claims 1 to 4, wherein the birefringent assembly comprises: one element having an optical path length of L; and a plurality of reflectors for directing the optical signals through the element at least three times.

7. The apparatus according to claim 5 or 6, further comprising third beam rotating means for adjusting the polarizations of the first, second or third optical signals before entering into at least one of the elements of the birefringent assembly.

8. The apparatus according to claim 7, wherein the third beam rotating means is selected from the group consisting of half-wave plates, polarizers, faraday rotators, and tuning plates.

9. The apparatus according to any one claims 5 to 8, wherein each birefringent element is comprised of at least two plates; and wherein at least two of the plates are comprised of different materials to enhance thermal stability.

10. The apparatus according to any one of claims 1 to 9, further comprising:
a lens at each port for collimating incoming signals and/or focusing outgoing signals;
second beam splitting/combining means at each port for separating incoming signals into pairs of polarized sub-beams, and/or for combining outgoing pairs of polarized sub-beams; and
sub-beam rotating means for rotating one of each pair of sub-beams, whereby in each pair of incoming sub-beams both sub-beams have parallel polarizations for entry into the first beam splitting/combining means and/or whereby the sub-beams in each pair of outgoing sub-beams are orthogonal for entry into the second beam splitting/combing means.

11. The apparatus according to any one of claims 1 to 10, wherein the first reflecting means comprises an etalon.
